# EUROPEAN PATENT APPLICATION

(11) **EP 1 699 248 A1**
(43) Date of publication of application: **06.09.2006**
(21) Application number: 05019216.0
(22) Date of filing: 05.09.2005
(51) Int. Cl.: H04Q 7/22, H04Q 7/38, H04H 1/00, H04Q 7/32, H04N 7/24

(54) **Method and system for cellular network services and integrated television broadcast having intelligent service control**

(30) Priority: 13.12.2004 US 11009
(71) Applicant: Broadcom Corporation, Irvine, CA 92618-7013 (US)
(72) Inventor: van Rooyen, Pieter, San Diego, CA 92130 (US)
(74) Representative: Jehle, Volker Armin

(57) **Abstract**

Methods and systems for communicating with a plurality of communications networks are provided herein. Aspects of the system may comprise cellular processing circuitry that processes a plurality of cellular frequency band communications services, comprising at least one cellular voice service and at least one cellular data service. The cellular processing circuitry may comprise a plurality of cellular processing integrated circuits within a mobile terminal. Broadcast processing circuitry may processes VHF/UHF frequency band broadcast services in at least one single broadcast processing integrated circuit within the mobile terminal. One or more of the cellular processing integrated circuits may communicate with, and shares at least a single memory with, the single broadcast processing integrated circuit. The single memory may be coupled to one or more of the cellular processing integrated circuits and the single broadcast processing integrated circuit via a memory interface.

## Description

### CROSS-REFERENCE TO RELATED APPLICATIONS/INCORPORATION BY REFERENCE

This application makes reference to:
United States Application Serial No. __________ (Attorney Docket No. 16330US01), filed December 13, 2004;
United States Application Serial No. __________ (Attorney Docket No. 16331US01), filed December 13, 2004;
United States Application Serial No. __________ (Attorney Docket No. 16332US01), filed December 13, 2004;
United States Application Serial No. __________ (Attorney Docket No. 16333US01), filed December 13, 2004;
United States Application Serial No. __________ (Attorney Docket No. 16334US01), filed December 13, 2004;
United States Application Serial No. __________ (Attorney Docket No. 16335US01), filed December 13, 2004;
United States Application Serial No. __________ (Attorney Docket No. 16336US01), filed December 13, 2004;
United States Application Serial No. __________ (Attorney Docket No. 16338US01), filed December 13, 2004;
United States Application Serial No. __________ (Attorney Docket No. 16339US01), filed December 13, 2004;
United States Application Serial No. __________ (Attorney Docket No. 16340US01), filed December 13, 2004;
United States Application Serial No. __________ (Attorney Docket No. 16341US01), filed December 13, 2004;
United States Application Serial No. __________ (Attorney Docket No. 16342US01), filed December 13, 2004;
United States Application Serial No. __________ (Attorney Docket No. 16343US01), filed December 13, 2004;
United States Application Serial No. __________ (Attorney Docket No. 16344US01), filed December 13, 2004;
United States Application Serial No. __________ (Attorney Docket No. 16345US01), filed December 13, 2004;
United States Application Serial No. __________ (Attorney Docket No. 16346US01), filed December 13, 2004; and
United States Application Serial No. __________ (Attorney Docket No. 16348US01), filed December 13, 2004.

All of the above stated applications are hereby incorporated herein by reference in their entirety.

### FIELD OF THE INVENTION

Certain embodiments of the invention relate to communication of information via a plurality of different networks. More specifically, certain embodiments of the invention relate to a method and system for a cellular network and an integrated broadcast television (TV) downlink with intelligent service control without feedback.

### BACKGROUND OF THE INVENTION

Broadcasting and telecommunications have historically occupied separate fields. In the past, broadcasting was largely an "over-the-air" medium while wired media carried telecommunications. That distinction may no longer apply as both broadcasting and telecommunications may be delivered over either wired or wireless media. Present development may adapt broadcasting to mobility services. One limitation has been that broadcasting may often require high bit rate data transmission at rates higher than could be supported by existing mobile communications networks. However, with emerging developments in wireless communications technology, even this obstacle may be overcome.

Terrestrial television and radio broadcast networks have made use of high power transmitters covering broad service areas, which enable one-way distribution of content to user equipment such as televisions and radios. By contrast, wireless telecommunications networks have made use of low power transmitters, which have covered relatively small areas known as "cells". Unlike broadcast networks, wireless networks may be adapted to provide two-way interactive services between users of user equipment such as telephones and computer equipment.

The introduction of cellular communications systems in the late 1970's and early 1980's represented a significant advance in mobile communications. The networks of this period may be commonly known as first generation, or "1G" systems. These systems were based upon analog, circuit-switching technology, the most prominent of these systems may have been the advanced mobile phone system (AMPS). Second generation, or "2G" systems ushered improvements in performance over 1 G systems and introduced digital technology to mobile communications. Exemplary 2G systems include the global system for mobile communications (GSM), digital AMPS (D-AMPS), and code division multiple access (CDMA). Many of these systems have been designed according to the paradigm of the traditional telephony architecture, often focused on circuit-switched services, voice traffic, and supported data transfer rates up to 14.4 kbits/s. Higher data rates were achieved through the deployment of "2.5G" networks, many of which were adapted to existing 2G network infrastructures. The 2.5G networks began the introduction of packet-switching technology in wireless networks. However, it is the evolution of third generation, or "3G" technology that may introduce fully packet-switched networks, which support high-speed data communications.

The general packet radio service (GPRS), which is an example of a 2.5G network service oriented for data communications, comprises enhancements to GSM that required additional hardware and software elements in existing GSM network infrastructures. Where GSM may allot a single time slot in a time division multiple access (TDMA) frame, GPRS may allot up to 8 such time slots providing a data transfer rate of up to 115.2 kbits/s. Another 2.5G network, enhanced data rates for GSM evolution (EDGE), also comprises enhancements to GSM, and like GPRS, EDGE may allocate up to 8 time slots in a TDMA frame for packet-switched, or packet mode, transfers. However, unlike GPRS, EDGE adapts 8 phase shift keying (8-PSK) modulation to achieve data transfer rates that may be as high as 384 kbits/s.

The universal mobile telecommunications system (UMTS) is an adaptation of a 3G system, which is designed to offer integrated voice, multimedia, and Internet access services to portable user equipment. The UMTS adapts wideband CDMA (W-CDMA) to support data transfer rates, which may be as high as 2 Mbits/s. One reason why W-CDMA may support higher data rates is that W-CDMA channels may have a bandwidth of 5MHz versus the 200 kHz channel bandwidth in GSM. A related 3G technology, high-speed downlink packet access (HSDPA), is an Internet protocol (IP) based service oriented for data communications, which adapts W-CDMA to support data transfer rates of the order of 10 Mbits/s. HSDPA achieves higher data rates through a plurality of methods. For example, many transmission decisions may be made at the base station level, which is much closer to the user equipment as opposed to being made at a mobile switching center or office. These may include decisions about the scheduling of data to be transmitted, when data are to be retransmitted, and assessments about the quality of the transmission channel. HSDPA may also utilize variable coding rates in transmitted data. HSDPA also supports 16-level quadrature amplitude modulation (16-QAM) over a high-speed downlink shared channel (HS-DSCH), which permits a plurality of users to share an air interface channel.

The multiple broadcast/multicast service (MBMS) is an IP datacast service, which may be deployed in EDGE and UMTS networks. The impact of MBMS is largely within the network in which a network element adapted to MBMS, the broadcast multicast service center (BM-SC), interacts with other network elements within a GSM or UMTS system to manage the distribution of content among cells within a network. User equipment may be required to support functions for the activation and deactivation of MBMS bearer service. MBMS may be adapted for delivery of video and audio information over wireless networks to user equipment. MBMS may be integrated with other services offered over the wireless network to realize multimedia services, such as multicasting, which may require two-way interaction with user equipment.

Standards for digital television terrestrial broadcasting (DTTB) have evolved around the world with different systems being adopted in different regions. The three leading DTTB systems are, the advanced standards technical committee (ATSC) system, the digital video broadcast terrestrial (DVB-T) system, and the integrated service digital broadcasting terrestrial (ISDB-T) system. The ATSC system has largely been adopted in North America, South America, Taiwan, and South Korea. This system adapts trellis coding and 8-level vestigial sideband (8-VSB) modulation. The DVB-T system has largely been adopted in Europe, the Middle East, Australia, as well as parts of Africa and parts of Asia. The DVB-T system adapts coded orthogonal frequency division multiplexing (COFDM). The ISDB-T system has been adopted in Japan and adapts bandwidth segmented transmission orthogonal frequency division multiplexing (BST-OFDM). The various DTTB systems may differ in important aspects; some systems employ a 6MHz channel separation, while others may employ 7MHz or 8MHz channel separations. Planning for the allocation of frequency spectrum may also vary among countries with some countries integrating frequency allocation for DTTB services into the existing allocation plan for legacy analog broadcasting systems. In such instances, broadcast towers for DTTB may be co-located with broadcast towers for analog broadcasting services with both services being allocated similar geographic broadcast coverage areas. In other countries, frequency allocation planning may involve the deployment of single frequency networks (SFNs), in which a plurality of towers, possibly with overlapping geographic broadcast coverage areas (also known as "gap fillers"), may simultaneously broadcast identical digital signals. SFNs may provide very efficient use of broadcast spectrum as a single frequency may be used to broadcast over a large coverage area in contrast to some of the conventional systems, which may be used for analog broadcasting, in which gap fillers transmit at different frequencies to avoid interference.

Even among countries adopting a common DTTB system, variations may exist in parameters adapted in a specific national implementation. For example, DVB-T not only supports a plurality of modulation schemes, comprising quadrature phase shift keying (QPSK), 16-QAM, and 64 level QAM (64-QAM), but DVB-T offers a plurality of choices for the number of modulation carriers to be used in the COFDM scheme. The "2K" mode permits 1,705 carrier frequencies that may carry symbols, each with a useful duration of 224 µs for an 8MHz channel. In the "8K" mode there are 6,817 carrier frequencies, each with a useful symbol duration of 896 µs for an 8MHz channel. In SFN implementations, the 2K mode may provide comparatively higher data rates but smaller geographical coverage areas than may be the case with the 8K mode. Different countries adopting the same system may also employ different channel separation schemes.

While 3G systems are evolving to provide integrated voice, multimedia, and data services to mobile user equipment, there may be compelling reasons for adapting DTTB systems for this purpose. One of the more notable reasons may be the high data rates that may be supported in DTTB systems. For example, DVB-T may support data rates of 15 Mbits/s in an 8 MHz channel in a wide area SFN. There are also significant challenges in deploying broadcast services to mobile user equipment. Many handheld portable devices, for example, may require that services consume minimum power to extend battery life to a level which may be acceptable to users. Another consideration is the Doppler effect in moving user equipment, which may cause inter-symbol interference in received signals. Among the three major DTTB systems, ISDB-T was originally designed to support broadcast services to mobile user equipment. While DVB-T may not have been originally designed to support mobility broadcast services, a number of adaptations have been made to provide support for mobile broadcast capability. The adaptation of DVB-T to mobile broadcasting is commonly known as DVB handheld (DVB-H).

To meet requirements for mobile broadcasting the DVB-H specification may support time slicing to reduce power consumption at the user equipment, addition of a 4K mode to enable network operators to make tradeoffs between the advantages of the 2K mode and those of the 8K mode, and an additional level of forward error correction on multiprotocol encapsulated data - forward error correction (MPE-FEC) to make DVB-H transmissions more robust to the challenges presented by mobile reception of signals and to potential limitations in antenna designs for handheld user equipment. DVB-H may also use the DVB-T modulation schemes, like QPSK and 16-quadrature amplitude modulation (16-QAM), which may be most resilient to transmission errors. MPEG audio and video services may be more resilient to error than data, thus additional forward error correction may not be required to meet DTTB service objectives.

Time slicing may reduce power consumption in user equipment by increasing the burstiness of data transmission. Instead of transmitting data at the received rate, under time slicing techniques, the transmitter may delay the sending of data to user equipment and send data later but at a higher bit rate. This may reduce total data transmission time over the air, time, which may be used to temporarily power down the receiver at the user equipment. Time slicing may also facilitate service handovers as user equipment moves from one cell to another because the delay time imposed by time slicing may be used to monitor transmitters in neighboring cells. The MPE-FEC may comprise Reed-Solomon coding of IP data packets, or packets using other data protocols. The 4K mode in DVB-H may utilize 3,409 carriers, each with a useful duration of 448 µs for an 8MHz channel. The 4K mode may enable network operators to realize greater flexibility in network design at minimum additional cost. Importantly, DVB-T and DVB-H may coexist in the same geographical area. Transmission parameter signaling (TPS) bits that are carried in the header of transmitted messages may indicate whether a given DVB transmission is DVB-T or DVB-H, in addition to indicating whether DVB-H specific features, such as time slicing, or MPE-FEC are to be performed at the receiver. As time slicing may be a mandatory feature of DVB-H, an indication of time slicing in the TPS may indicate that the received information is from a DVB-H service.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain embodiments of the invention may be found in a method and system for communicating with a plurality of communications networks. Aspects of the system may comprise cellular processing circuitry that processes a plurality of cellular frequency band communications services, comprising at least one cellular voice service and at least one cellular data service. The cellular processing circuitry may comprise a plurality of cellular processing integrated circuits within a mobile terminal. Broadcast processing circuitry may process VHF/UHF frequency band broadcast services in at least one single broadcast processing integrated circuit within the mobile terminal.

One or more of the cellular processing integrated circuits may communicate with, and may share at least a single memory with, the single broadcast processing integrated circuit. The single memory may be coupled to one or more of the cellular processing integrated circuits and the single broadcast processing integrated circuit via a memory interface. The memory interface may comprise an asynchronous static RAM (SRAM) interface and/or a synchronous dynamic RAM (SDRAM) interface. The VHF/UHF frequency band broadcast services may be received from a digital video broadcasting (DVB) ATSC, ISDB system.

The cellular frequency band communications services may be received from a global system for mobile communications (GSM) system, a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and/or a multiple broadcast/multicast service (MBMS) system. A baseband processor (BBP) may comprise one or more of the cellular processing integrated circuits and the at least one single broadcast processing integrated circuit.

Circuitry may be provided that receives one or more of the cellular frequency band communications services over an interface, which couples a BBP and a radio frequency front end (RFFE). Circuitry may be provided that receives the VHF/UHF frequency band broadcast services over an interface which couples a BBP and an RFFE. The cellular processing integrated circuits may process information received from one or more of the cellular frequency band communications services. A broadcast processing integrated circuit may be adapted to process information received from the VHF/UHF frequency band broadcast services. The cellular processing integrated circuits may utilize random access memory (RAM) while processing information received from the cellular frequency band communications services.

Another aspect of the system may comprise a mobile terminal comprising cellular processing integrated circuits that process a cellular voice channel and at least one cellular data channel. A channel interface may be coupled to each of the cellular processing integrated circuits. At least one single broadcast processor integrated circuit may be adapted to processes a UHF/VHF channel coupled to the channel interface. A memory interface may be coupled to one or more of the cellular processing integrated circuits and the at least one single broadcast processor integrated circuit. A memory may be coupled to the memory interface. A control interface and a power management circuitry may couple one or more of the cellular processing integrated circuits. A control interface may couple one or more of the cellular processing integrated circuits and power management circuitry.

The memory interface may comprise an asynchronous SRAM interface and/or a synchronous SDRAM interface. A control interface may couple the single broadcast processing integrated circuit and power management circuitry. The channel interface may couple the system to an RFFE. A serial interface may couple the system to circuitry comprising one or more user interfaces. The user interface may comprise at least one of a display, a keypad, a camera, a frequency modulation (FM) radio, a wireless local area network (WLAN), an assisted global positioning service (A-GPS), a universal subscriber identity module (USIM), and/or a Bluetooth interfaces. A reference clock signal generator may be coupled to one or more of the cellular processing integrated circuits and the single broadcast processor integrated circuit.

Aspects of the method may comprise processing a plurality of cellular frequency band communications services, comprising at least one cellular voice service and at least one cellular data service, in a plurality of cellular processing integrated circuits within a mobile terminal. VHF/UHF frequency band broadcast services may be processed in at least one single broadcast processing integrated circuit within the mobile terminal. One or more of the cellular processing integrated circuits may communicate with, and may share at least a single memory with, the single broadcast processing integrated circuit. The single memory may be coupled to one or more of the cellular processing integrated circuits and the single broadcast processing integrated circuit via a memory interface. The memory interface may comprise an asynchronous SRAM interface and/or a synchronous SDRAM interface.

The VHF/UHF frequency band broadcast services may be received from a digital video broadcasting (DVB) system. The cellular frequency band communications services may be received from at least one of a global system for mobile communications (GSM)system, a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and/or a multiple broadcast/multicast service (MBMS) systems.

A baseband processor (BBP) may comprise the cellular processing integrated circuits and the at least one single broadcast processing integrated circuit. The cellular frequency band communications services may be received over an interface which couples a BBP and a radio frequency front end (RFFE), and the VHF/UHF frequency band broadcast services may be received over an interface which couples a BBP and an RFFE. The cellular processing integrated circuits may process information received from the plurality of cellular frequency band communications services. The at least one broadcast processing integrated circuit may process information received from the VHF/UHF frequency band broadcast services. The cellular processing integrated circuits may utilize a random access memory (RAM), while processing information received from the cellular frequency band communications services.
According to an aspect of the invention, a system for communicating with a plurality of communications networks is provided, the system comprising:
cellular processing circuitry that processes a plurality of cellular frequency band communications services, comprising at least one cellular voice service and at least one cellular data service, said cellular processing circuitry comprising a plurality of cellular processing integrated circuits within a mobile terminal; and
broadcast processing circuitry that processes VHF/UHF frequency band broadcast services in at least one single broadcast processing integrated circuit within said mobile terminal,
wherein said plurality of cellular processing integrated circuits communicates with, and shares at least a single memory with, said at least one single broadcast processing integrated circuit.
Advantageously, said single memory is coupled to at least a portion of said plurality of cellular processing integrated circuits and said at least one single broadcast processing integrated circuit via a memory interface.
Advantageously, said VHF/UHF frequency band broadcast services are received from one of a digital video broadcasting (DVB) system, an ISDB system, and an ATSC system.
Advantageously, said plurality of cellular frequency band communications services are received from at least one of a global system for mobile communications (GSM), a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and a multiple broadcast/multicast service (MBMS) system.
Advantageously, a baseband processor comprises said plurality of cellular processing integrated circuits and said at least one single broadcast processing integrated circuit.
Advantageously, the system further comprises circuitry that receives said plurality of cellular frequency band communications services over an interface which couples a baseband processor and a radio frequency front end.
Advantageously, the system further comprises circuitry that receives said VHF/UHF frequency band broadcast services over an interface which couples a baseband processor and a radio frequency front end.
Advantageously, said plurality of cellular processing integrated circuits process information received from said plurality of cellular frequency band communications services.
Advantageously, said at least one broadcast processing integrated circuit processes information received from said VHF/UHF frequency band broadcast services.
Advantageously, the system further comprises a random access memory (RAM) utilized by said plurality of cellular processing integrated circuits while processing information received from said plurality of cellular frequency band communications services.
According to an aspect of the invention, a method for communicating with a plurality of communications networks is provided, the method comprising:
processing a plurality of cellular frequency band communications services, comprising at least one cellular voice service and at least one cellular data service, in a plurality of cellular processing integrated circuits within a mobile terminal; and
processing VHF/UHF frequency band broadcast services in at least one single broadcast processing integrated circuit within said mobile terminal,
wherein said plurality of cellular processing integrated circuits communicates with, and shares at least a single memory with, said at least one single broadcast processing integrated circuit.
Advantageously, said single memory is coupled to at least a portion of said plurality of cellular processing integrated circuits and said at least one single broadcast processing integrated circuit via a memory interface.
Advantageously, the method further comprises receiving said VHF/UHF frequency band broadcast services from one of a digital video broadcasting (DVB) system, an ISDB system, and an ATSC system.
Advantageously, said plurality of cellular frequency band communications services are received from at least one of a global system for mobile communications (GSM), a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and a multiple broadcast/multicast service (MBMS) system.
Advantageously, a baseband processor comprises said plurality of cellular processing integrated circuits and said at least one single broadcast processing integrated circuit.
Advantageously, the method further comprises receiving said plurality of cellular frequency band communications services over an interface which couples a baseband processor and a radio frequency front end.
Advantageously, the method further comprises receiving said VHF/UHF frequency band broadcast services over an interface which couples a baseband processor and a radio frequency front end.
Advantageously, the method further comprises processing said information received from said plurality of cellular frequency band communications services via said plurality of cellular processing integrated circuits.
Advantageously, said at least one broadcast processing integrated circuit processes information received from said VHF/UHF frequency band broadcast services.
Advantageously, the method further comprises utilizing a random access memory (RAM) by said plurality of cellular processing integrated circuits while processing information received from said plurality of cellular frequency band communications services.
According to an aspect of the invention, a system for communicating with a plurality of communications networks is provided, the system comprising:
a mobile terminal comprising:
   a plurality of cellular processing integrated circuits that process at least one cellular voice channel and at least one cellular data channel;
   at least one channel interface coupled to each of said plurality of cellular processing integrated circuits;
   at least one single broadcast processor integrated circuit that processes a UHFNHF channel coupled to said at least one channel interface;
   a memory interface coupled to at least one of said plurality of cellular processing integrated circuits,
   said memory interface coupled to said at least one single broadcast processor integrated circuit; and
   memory coupled to said memory interface.
Advantageously, the system further comprises a control interface that couples at least a portion of said plurality of cellular processing integrated circuits.
Advantageously, the system further comprises power management circuitry coupled to at least one of said plurality of cellular processing integrated circuits.
Advantageously, the system further comprises a control interface which couples at least one of said plurality of cellular processing integrated circuits, and power management circuitry.
Advantageously, said memory interface comprises at least one of asynchronous SRAM interface and synchronous SDRAM interface.
Advantageously, said at least one channel interface couples the system to a radio frequency front end.
Advantageously, a serial interface couples the system to circuitry comprising a plurality of user interfaces.
Advantageously, said user interface comprises at least one of a display, a keypad, a camera, a frequency modulation (FM) radio, a wireless local area network (WLAN), an assisted global positioning service (A-GPS), a universal subscriber identity module (USIM), and a Bluetooth interfaces.
Advantageously, the system further comprises a reference clock signal generator coupled to at least one of said plurality of cellular processing integrated circuits and said at least one single broadcast processor integrated circuit.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

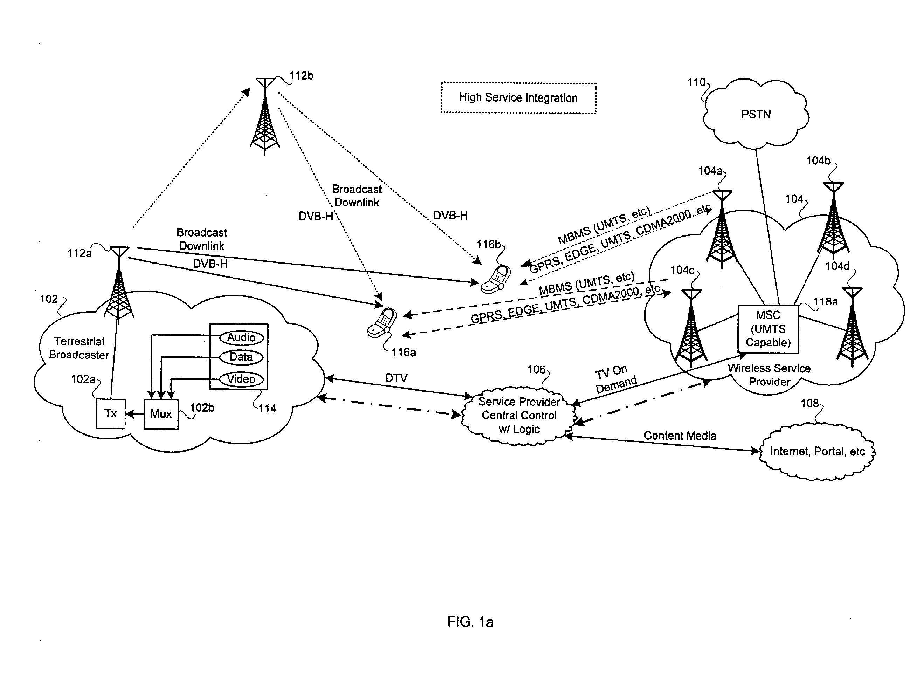

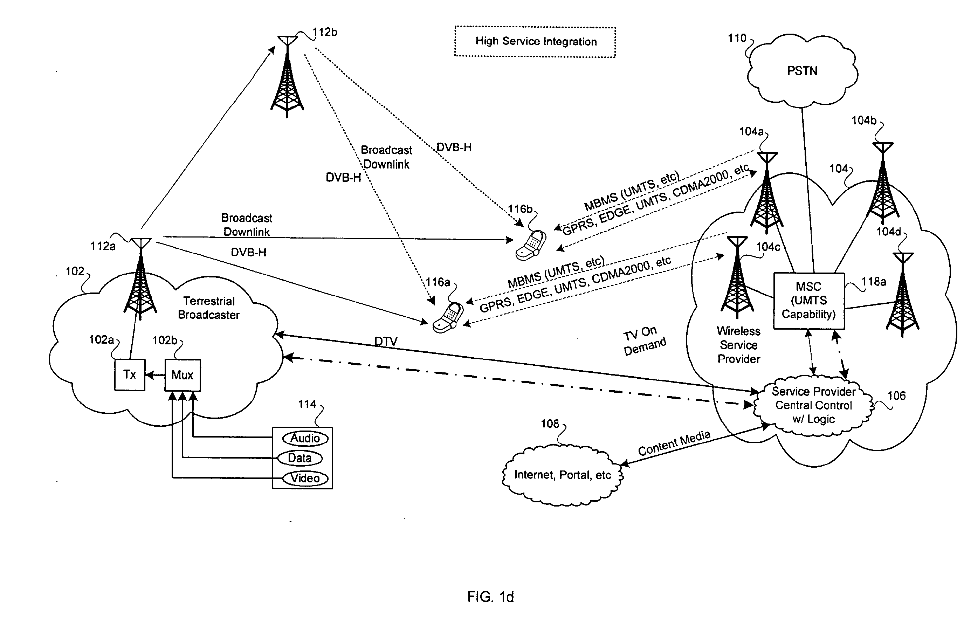

FIG. 1a is a block diagram of an exemplary system for providing integrated services between a cellular network and a digital video broadcast network, in accordance with an embodiment of the invention.

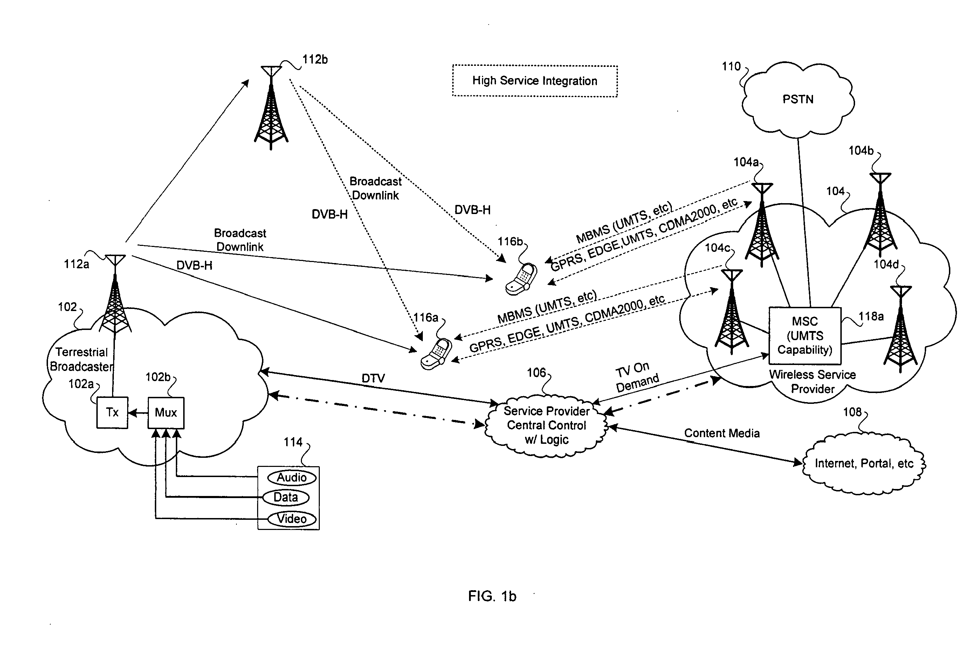

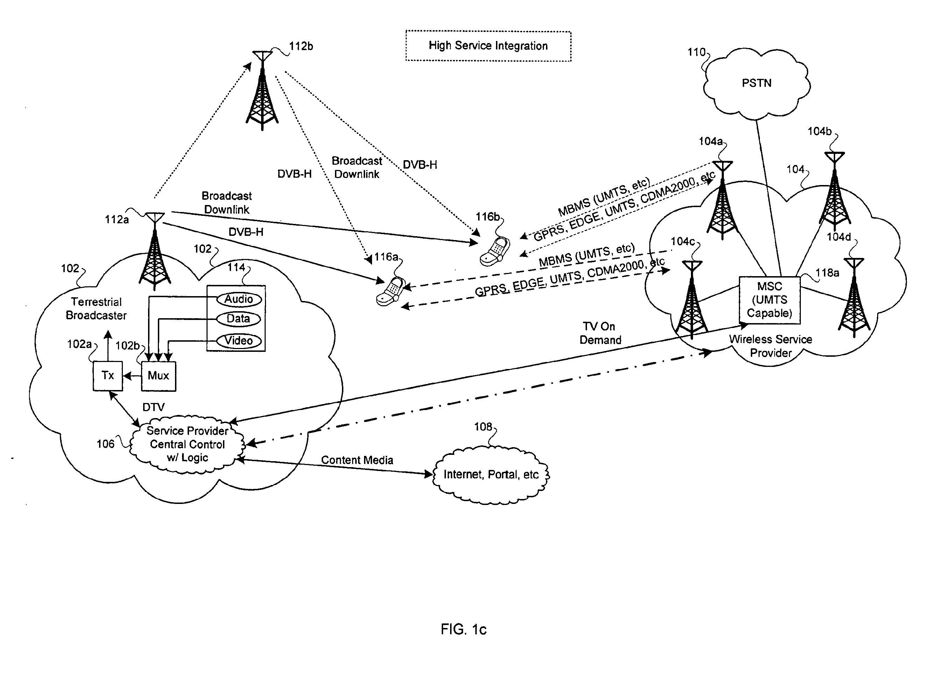

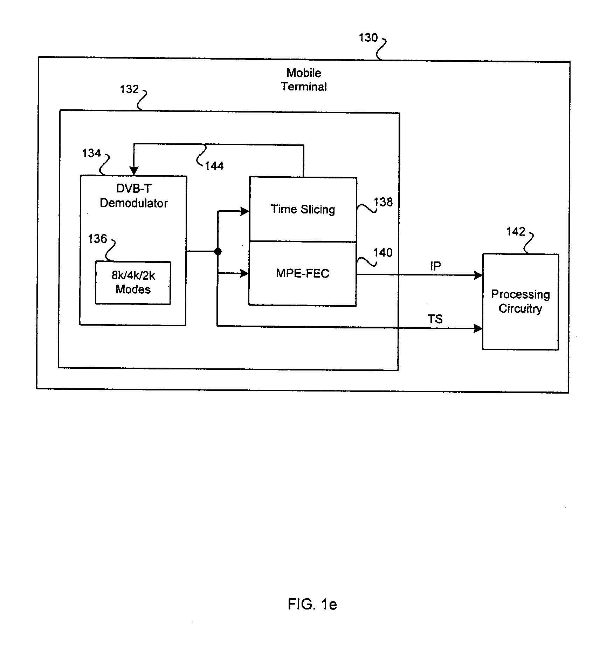

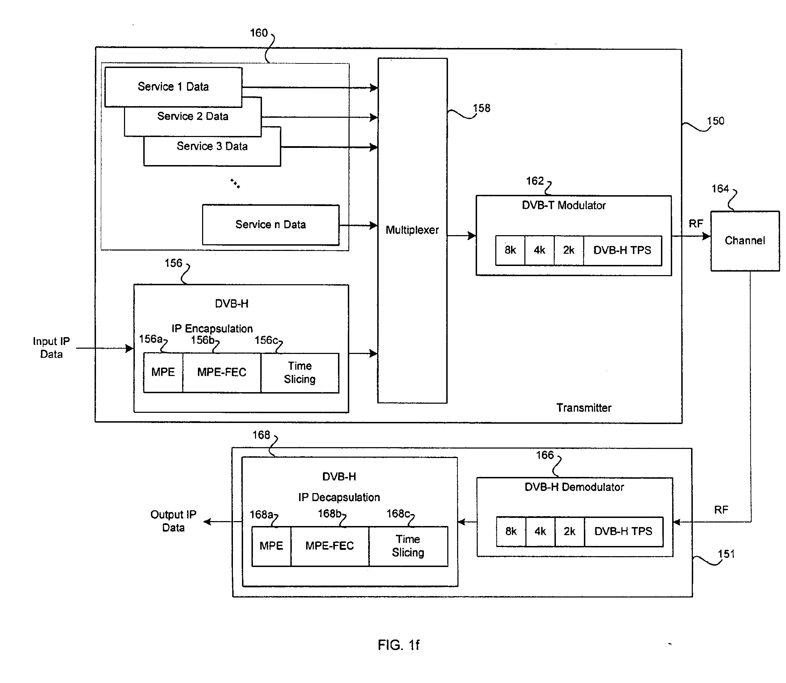

FIG. 1 b is a block diagram of an alternative embodiment of the exemplary system of FIG. 1a for providing integrated services between a cellular network and a digital video broadcast network, in accordance with an embodiment of the invention.

FIG. 1c is a block diagram of an alternative embodiment of the exemplary system of FIG. 1 a for providing integrated services between a cellular network and a digital video broadcast network, in accordance with an embodiment of the invention.

FIG. 1d is a block diagram of an alternative embodiment of the exemplary system of FIG. 1a for providing integrated services between a cellular network and a digital video broadcast network, in accordance with an embodiment of the invention.

FIG. 1 e is a high-level block diagram of exemplary DVB-H receiver circuitry in a mobile terminal, which may be utilized in connection with an embodiment of the invention.

FIG. 1f is a block diagram illustrating the sharing of a multiplexer (MUX) by a plurality of MPEG2 services, which may be utilized in connection with an embodiment of the invention.

FIG. 2a is a block diagram of a mobile terminal that is adapted to receive VHF/UHF broadcasts and cellular communications, in accordance with an embodiment of the invention.

FIG. 2b is a block diagram illustrating receive processing circuit of an RF integrated circuit (RFIC), in accordance with an embodiment of the invention.

FIG. 2c is a high-level block diagram illustrating an exemplary configuration for a RFIC and a base band processing circuit, in accordance with an embodiment of the invention.

FIG. 2d is a flowchart illustrating exemplary steps that may be utilized in connection with an embodiment of the invention.

FIG. 2e is a diagram of an exemplary mobile terminal that may be utilized for communicating information via a plurality of different networks, accordance with an embodiment of the invention.

FIG. 3a is a block diagram illustrating an exemplary radio frequency front end (RFFE) and baseband processor (BBP), in accordance with an embodiment of the invention.

FIG. 3b is a block diagram illustrating exemplary connection for a plurality of baseband cellular processor ICs and at least one baseband broadcast processor IC, in accordance with an embodiment of the invention.

FIG. 3c is a block diagram illustrating exemplary processing circuit for a mobile terminal, in accordance with an embodiment of the invention.

FIG. 3d is a block diagram illustrating exemplary processing circuit for a mobile terminal, in accordance with an embodiment of the invention.

FIG. 3e is a block diagram illustrating exemplary integrated DVB and cellular processing circuitry for mobile terminal (DCPCMT) utilizing a plurality of receive antennas, in accordance with an embodiment of the invention.

FIG. 3f is a block diagram illustrating exemplary integrated DVB and cellular processing circuitry for mobile terminal (DCPCMT) utilizing a single receive antenna, in accordance with an embodiment of the invention.

FIG. 3g is an exemplary flow diagram illustrating reception of cellular frequency band communications services and VHF/UHF band broadcast services at a mobile terminal, in accordance with an embodiment of the invention.

FIG. 3h is an exemplary block diagram illustrating a mobile terminal, in accordance with an embodiment of the invention.

### DETAILED DESCRIPTION OF THE INVENTION

Certain embodiments of the invention may be found in a method and system for communicating with a plurality of communications networks. Aspects of the system may comprise a plurality of cellular processing integrated circuits within a mobile terminal that may be adapted to process one or more cellular frequency band communications services. The cellular frequency band communications services may comprise at least one voice service and at least one data service. VHF/UHF frequency band broadcast services may be processed by broadcast processing circuitry, which may comprise at least one single broadcast processing integrated circuit within the mobile terminal. One or more of the cellular processing integrated circuits may communicate with, and may share a single memory with, the single broadcast processing integrated circuit. The single memory may be coupled to the cellular processing integrated circuits and the single broadcast processing integrated circuit via a memory interface. The memory interface may comprise an asynchronous SRAM interface and/or a synchronous SDRAM interface, and may be utilized to facilitate communication between at least one cellular processing integrated circuit and at least one broadcast processing integrated circuit during signal processing.

FIG. 1a is a block diagram of an exemplary system for providing integrated services between a cellular network and a digital video broadcast network, in accordance with an embodiment of the invention. Referring to FIG. 1 a, there is shown terrestrial broadcaster network 102, wireless service provider network 104, service provider 106, portal 108, public switched telephone network 110, and mobile terminals (MTs) 116a and 116b. The terrestrial broadcaster network 102 may comprise transmitter (Tx) 102a, multiplexer (Mux) 102b, and information content source 114. The content source 114 may also be referred to as a data carousel, which may comprise audio, data and video content. The terrestrial broadcaster network 102 may also comprise VHF/UHF broadcast antennas 112a and 112b. The wireless service provider network 104 may comprise mobile switching center (MSC) 118a, and a plurality of cellular base stations 104a, 104b, 104c, and 104d.

The terrestrial broadcaster network 102 may comprise suitable equipment that may be adapted to encode and/or encrypt data for transmission via the transmitter 102a. The transmitter 102a in the terrestrial broadcast network 102 may be adapted to utilize VHF/UHF broadcast channels to communicate information to the mobile terminals 116a, 116b. The multiplexer 102b associated with the terrestrial broadcaster network 102 may be utilized to multiplex data from a plurality of sources. For example, the multiplexer 102b may be adapted to multiplex various types of information such as audio, video and/or data into a single pipe for transmission by the transmitter 102a. Content media from the portal 108, which may be handled by the service provider 106 may also be multiplexed by the multiplexer 102b. The portal 108 may be an ISP service provider. Although DVB is illustrated as the VHF/UHF standard, the invention is not limited in this regard. Accordingly, ATSC, ISDB or other VHF/UHF standard may be utilized.

In one aspect of the invention, the terrestrial broadcaster network 102 may be adapted to provide one or more digital television (DTV) channels to the service provider 106. In this regard, the terrestrial broadcaster network 102 may comprise suitable high-speed or broadband interfaces that may be utilized to facilitate transfer of the DTV channels from the terrestrial broadcast network 102 to the service provider. The service provider 106 may then utilize at least a portion of the DTV channels to provide television (TV) on demand service, or other similar types of services to the wireless service provider network 104. Accordingly, the service provider 106 may further comprise suitable high-speed or broadband interfaces that may be utilized to facilitate the transfer of related TV on demand information to the MSC 118a.

Although communication links between the terrestrial broadcast network 102 and the service provider 106, and also the communication links between the service provider 106 and the wireless service provider 104 may be wired communication links, the invention may be not so limited. Accordingly, at least one of these communication links may be wireless communication links. In an exemplary embodiment of the invention, at least one of these communication links may be an 802.x based communication link such as 802.16 or WiMax broadband access communication link. In another exemplary embodiment of the invention, at least one of these connections may be a broadband line of sight (LOS) connection.

The wireless service provider network 104 may be a cellular or personal communication service (PCS) provider that may be adapted to handle broadcast UMTS (B-UMTS). The term cellular as utilized herein refers to both cellular and PCS frequencies bands. Hence, usage of the term cellular may comprise any band of frequencies that may be utilized for cellular communication and/or any band of frequencies that may be utilized for PCS communication. Notwithstanding, broadcast UMTS (B-UMTS) may also be referred to as MBMS. MBMS is a high-speed data service that is overlaid on WCDMA to provide much higher data rates than may be provided by core WCDMA. In this regard, the B-UMTS services may be superimposed on the cellular or PCS network.

The wireless service provider network 104 may utilize cellular or PCS access technologies such as GSM, CDMA, CDMA2000, WCDMA, AMPS, N-AMPS, and/or TDMA. The cellular network may be utilized to offer bidirectional services via uplink and downlink communication channels, while the B-UMTS or MBMS network may be utilized to provide a unidirectional broadband services via a downlink channel. The B-UMTS or MBMS unidirectional downlink channel may be utilized to broadcast content media and/or multimedia type information to the mobile terminals 116a and 116b. Although MBMS provides only unidirectional downlink communication, the invention may be not so limited. In this regard, other bidirectional communication methodologies comprising uplink and downlink capabilities, whether symmetric or asymmetric, may be utilized.

Although the wireless service provider network 104 is illustrated as a GSM, CDMA, WCDMA based network and/or variants thereof, the invention is not limited in this regard. Accordingly, the wireless service provider network 104 may be an 802.11 based wireless network or wireless local area network (WLAN). The wireless service provider network 104 may also be adapted to provide 802.11 based wireless communication in addition to GSM, CDMA, WCDMA, CDMA2000 based network and/or variants thereof. In this case, the mobile terminals 116a, 116b may also be compliant with the 802.11 based wireless network.

In accordance with an exemplary embodiment of the invention, if the mobile terminal (MT) 116a is within an operating range of the VHF/UHF broadcasting antenna 112a and moves out of the latter's operating range and into an operating range of the VHF/UHF broadcasting antenna 112b, then VHF/UHF broadcasting antenna 112b may be adapted to provide VHF/UHF broadcast services to the mobile terminal 116a. If the mobile terminal 116a subsequently moves back into the operating range of the VHF/UHF broadcasting antenna 112a, then the broadcasting antenna 112a may be adapted to provide VHF/UHF broadcasting service to the mobile terminal 116a. In a somewhat similar manner, if the mobile terminal (MT) 116b is within an operating range of the VHF/UHF broadcasting antenna 112b and moves out of the latter's operating range and into an operating range of the broadcasting antenna 112a, then the VHF/UHF broadcasting antenna 112a may be adapted to provide VHF/UHF broadcasting service to the mobile terminal 116b. If the mobile terminal 116b subsequently moves back into the operating range of broadcasting antenna 112b, then the VHF/UHF broadcasting antenna 112b may be adapted to provide VHF/UHF broadcast services to the mobile terminal 116b.

The service provider 106 may comprise suitable interfaces, circuitry, logic and/or code that may be adapted to facilitate communication between the terrestrial broadcasting network 102 and the wireless communication network 104. In an illustrative embodiment of the invention the service provider 106 may be adapted to utilize its interfaces to facilitate exchange control information with the terrestrial broadcast network 102 and to exchange control information with the wireless service provider 104. The control information exchanged by the service provider 106 with the terrestrial broadcasting network 102 and the wireless communication network 104 may be utilized to control certain operations of the mobile terminals, the terrestrial broadcast network 102 and the wireless communication network 104.

In accordance with an embodiment of the invention, the service provider 106 may also comprise suitable interfaces, circuitry, logic and/or code that may be adapted to handle network policy decisions. For example, the service provider 106 may be adapted to manage a load on the terrestrial broadcast network 102 and/or a load on the wireless service provider network 104. Load management may be utilized to distribute the flow of information throughout the terrestrial broadcast network 102 and/or a load on the wireless service provider network 104. For example, if information is to be broadcasted via the wireless service provider network 104 to a plurality of mobile terminals within a particular cell handled by the base station 104a and it is determined that this may overload the wireless service provider network 104, then the terrestrial broadcast network 102 may be configured to broadcast the information to the mobile terminals.

The service provider 106 may also be adapted to handle certain types of service requests, which may have originated from a mobile terminal. For example, the mobile terminal 116a may request that information be delivered to it via a downlink VHF/UHF broadcast channel. However, a downlink VHF/UHF broadcast channel may be unavailable for the delivery of the requested information. As a result, the service provider 106 may route the requested information through an MBMS channel via the base station 104c to the mobile terminal 116a. The requested information may be acquired from the content source 114 and/or the portal 108. In another example, the mobile terminal 116b may request that information be delivered to it via a downlink cellular channel. However, the service provider 106 may determine that delivery of the information is not critical and/or the cheapest way to deliver to the mobile terminal 116b is via a downlink VHF/UHF broadcast channel. As a result, the service provider 106 may route the requested information from the portal 108 or content service 114 to the mobile terminal 116b. The service provider 106 may also have the capability to send at least a portion of information to be delivered to, for example, mobile terminal 116a via the VHF/UHF broadcast channel and a remaining portion of the information to be delivered via the cellular broadcast channel.

The portal 108 may comprise suitable logic, circuitry and/or code that may be adapted to provide content media to the service provider 106 via one or more communication links. These communication links, although not shown, may comprise wired and/or wireless communication links. The content media that may be provided by the portal 108 may comprise audio, data, video or any combination thereof. In this regard, the portal 108 may be adapted to provide one or more specialized information services to the service provider 106.

The public switched telephone network (PSTN) 110 may be coupled to the MSC 118a. Accordingly, the MSC 118a may be adapted to switch calls originating from within the PSTN 110 to one or more mobile terminals serviced by the wireless service provider 104. Similarly, the MSC 118a may be adapted to switch calls originating from mobile terminals serviced by the wireless service provider 104 to one or more telephones serviced by the PSTN 110.

The information content source 114 may comprise a data carousel. In this regard, the information content source 114 may be adapted to provide various information services, which may comprise online data including audio, video and data content. The information content source 114 may also comprise file download, and software download capabilities. In instances where a mobile terminal fails to acquire requested information from the information content source 114 or the requested information is unavailable, then the mobile terminal may acquire the requested information via, for example, a B-UMTS from the portal 108. The request may be initiated through an uplink cellular communication path.

The mobile terminals (MTs) 116a and 116b may comprise suitable logic, circuitry and/or code that may be adapted to handle the processing of uplink and downlink cellular channels for various access technologies and broadcast VHF/UHF technologies. In an exemplary embodiment of the invention, the mobile terminals 116a, 116b may be adapted to utilize one or more cellular access technologies such as GSM, GPRS, EDGE, CDMA, WCDMA, CDMA2000, HSDPA and MBMS (B-UMTS). The mobile terminal may also be adapted to receive and process VHF/UHF broadcast signals in the VHF/UHF bands. For example, a mobile terminal may be adapted to receive and process DVB-H signals. A mobile terminal may be adapted to request information via a first cellular service and in response, receive corresponding information via a VHF/UHF broadcast service. A mobile terminal may also be adapted to request information from a service provider via a cellular service and in response, receive corresponding information via a data service, which is provided via the cellular service. The mobile terminals may also be adapted to receive VHF/UHF broadcast information from either the base stations 104a, 104b, 104c, 104d or the VHF/UHF broadcast antennas 112a and 112b. In instances where a mobile terminal receives broadcast information from any of the base stations 104a, 104b, 104c, or 104d via a downlink MBMS communication channel, then the mobile terminal may communicate corresponding uplink information via an uplink cellular communication channel.

In one embodiment of the invention, a mobile terminal may be adapted to utilize a plurality of broadcast integrated circuits for receiving and processing VHF/UHF channels, and a plurality of cellular integrated circuits for receiving and processing cellular or PCS channels. In this regard, the plurality of cellular integrated circuits may be adapted to handle different cellular access technologies. For example, at least one of the cellular integrated circuits may be adapted to handle GSM, and at least one of the cellular integrated circuits may be adapted to handle WCDMA. For broadcast channels, each of the plurality of broadcast integrated circuits may be adapted to handle at least one VH/UHF channel.

In another embodiment of the invention, a mobile terminal may be adapted to utilize a single broadcast integrated circuit for receiving and processing VHF/UHF channels, and a single cellular integrated circuit for receiving and processing cellular or PCS channels. In this regard, the single cellular integrated circuit may be adapted to handle different cellular access technologies. For example, at least one of the cellular integrated circuit may be adapted to handle GSM, and at least one of the cellular integrated circuits may be adapted to handle WCDMA. For broadcast channels, the single broadcast integrated circuit may be adapted to handle at least one VH/UHF channel. Each of the mobile terminals may comprise a single memory interface that may be adapted to handle processing of the broadcast communication information and processing of cellular communication information. In this regard, an uplink cellular communication path may be utilized to facilitate receiving of broadcast information via a broadcast communication path.

In another embodiment of the invention, a mobile terminal may be adapted to utilize a single integrated circuit for receiving and processing broadcast VHF/UHF channels, and for receiving and processing cellular or PCS channels. In this regard, the single broadcast and cellular integrated circuit may be adapted to handle different cellular access technologies. For example, the single integrated circuit may comprise a plurality of modules each of which may be adapted to receive and process a particular cellular access technology or a VHF/UHF broadcast channel. Accordingly, a first module may be adapted to handle GSM, a second module may be adapted to handle WCDMA, and a third module may be adapted to handle at least one VHF/UHF channel.

FIG. 1b is a block diagram of an alternative embodiment of the exemplary system of FIG. 1 a for providing integrated services between a cellular network and a digital video broadcast network, in accordance with an embodiment of the invention. Referring to FIG. 1 b, there is shown terrestrial broadcaster network 102, wireless service provider network 104, service provider 106, portal 108, public switched telephone network 110, and mobile terminals (MTs) 116a and 116b. The terrestrial broadcaster network 102 may comprise transmitter (Tx) 102a, multiplexer (Mux) 102b, and VHF/UHF broadcast antennas 112a and 112b. Although VHF/UHF broadcast antenna 112b is illustrated separately from the terrestrial broadcast network 102, it may still be part of the terrestrial broadcast network 102. The wireless service provider network 104 may comprise mobile switching center (MSC) 118a, and a plurality of cellular base stations 104a, 104b, 104c, and 104d.

The system of FIG. 1 b is somewhat similar to the FIG. 1 a with the exception that FIG. 1 b has the content source 114 located external to the terrestrial broadcast network 102. The content source 114, which may also be referred to as a data carousel, may comprise audio, data and video content. At least a portion of the audio, data and/or video content stored in the content source 114 may be linked so that if information cannot be retrieved from the content source 114, then it may be received from the portal 108. In the system of FIG. 1 b, a provider other than the terrestrial broadcaster 102 may manage the content source 114. Notwithstanding, the audio, video and/or data from the content source 114 may still be multiplexed by the multiplexer 102b in the terrestrial broadcast network 114.

FIG. 1c is a block diagram of an alternative embodiment of the exemplary system of FIG. 1a for providing integrated services between a cellular network and a digital video broadcast network, in accordance with an embodiment of the invention. Referring to FIG. 1 c, there is shown terrestrial broadcaster network 102, wireless service provider network 104, portal 108, public switched telephone network 110, and mobile terminals (MTs) 116a and 116b. The terrestrial broadcaster network 102 may comprise transmitter (Tx) 102a, multiplexer (Mux) 102b, service provider 106, and VHF/UHF broadcast antennas 112a and 112b. The wireless service provider network 104 may comprise mobile switching center (MSC) 118a, and a plurality of cellular base stations 104a, 104b, 104c, and 104d.

The system of FIG. 1c is somewhat similar to the FIG. 1a with the exception that FIG. 1 b has the service provider 106 co-located with the terrestrial broadcast network 102. In this regard, the terrestrial broadcast network 102 may control the functions of the service provider 106. Since the terrestrial broadcast network 102 controls the functions of the service provider, the broadcast services may be more efficiently provided to the mobile terminals via the MBMS path provided by the wireless service provider 104 and/or the VHF/UHF broadcast downlink path provided by the terrestrial broadcaster network 102. Hence, instead of having to send information to an externally located service provider, the integrated control and logic services provided the terrestrial broadcaster network 102 and service provider 106 may instantly make decisions of how best to handle information for a mobile terminal.

FIG. 1d is a block diagram of an alternative embodiment of the exemplary system of FIG. 1 a for providing integrated services between a cellular network and a digital video broadcast network, in accordance with an embodiment of the invention. Referring to FIG. 1d, there is shown terrestrial broadcaster network 102, wireless service provider network 104, portal 108, public switched telephone network 110, and mobile terminals (MTs) 116a and 116b. The terrestrial broadcaster network 102 may comprise transmitter (Tx) 102a, multiplexer (Mux) 102b, and VHF/UHF broadcast antennas 112a and 112b. The wireless service provider network 104 may comprise service provider 106, mobile switching center (MSC) 118a, and a plurality of cellular base stations 104a, 104b, 104c, and 104d.

The system of FIG. 1d is somewhat similar to the FIG. 1a with the exception that FIG. 1 b has the service provider 106 co-located with the wireless service provider network 104. In this regard, the wireless service provider network 104 may control the functions of the service provider 106. Since the wireless service provider network 104 controls the functions of the service provider 106, the broadcast services may be more efficiently provided to the mobile terminals via the MBMS path provided by the wireless service provider 104 and/or the VHF/UHF broadcast downlink path provided by the terrestrial broadcaster network 102. Hence, instead of having to send information to an externally located service provider 106 as illustrated in FIG. 1 a, the integrated control and logic services provided the service provider 106 may instantly make decisions of how best to handle communication of information for a mobile terminal.

In another embodiment of the invention, since many of the services provided by the service provider 106 may already be integrated into the wireless service provider's 104 infrastructure, then the complexity of the service provider functions may be significantly reduced. For example, the wireless service provider 104, the latter of which already has the pertinent infrastructure in place, may now handle operation administration maintenance and provisioning (OAM&P) functions, which may be required by the service provider 106. Since the uplink capabilities are inherent in only the wireless service provider network 104, and the service provider function are also located within the service provider network 106, the uplink capabilities for the mobile stations 116a, 116b may be more efficiently managed from within the wireless service provider network 104.

FIG. 1e is a high-level block diagram of exemplary DVB-H receiver circuitry in a mobile terminal, which may be utilized in connection with an embodiment of the invention. Referring to FIG. 1 e, there is shown a mobile terminal 130. The mobile terminal 130 may comprise a DVB-H demodulator 132 and processing circuitry block 142. The DVB-H demodulator block 132 may comprise a DVB-T demodulator 134, time slicing block 138, and MPE-FEC block 140.

The DVB-T demodulator 134 may comprise suitable circuitry, logic and/or code that may be adapted to demodulate a terrestrial DVB signal. In this regard, the DVB-T demodulator 134 may be adapted to downconvert a received DVB-T signal to a suitable bit rate that may be handled by the mobile terminal 130. The DVB-T demodulator may be adapted to handle 2k, 4k and/or 8k modes.

The time slicing block 138 may comprise suitable circuitry, logic and/or code that may be adapted to minimize power consumption in the mobile terminal 130, particularly in the DVB-T demodulator 134. In general, time slicing reduces average power consumption in the mobile terminal by sending data in bursts via much higher instantaneous bit rates. In order to inform the DVB-T demodulator 134 when a next burst is going to be sent, a delta indicating the start of the next burst is transmitted within a current burst. During transmission, no data for an elementary stream (ES) is transmitted so as to allow other elementary streams to optimally share the bandwidth. Since the DVB-T demodulator 134 knows when the next burst will be received, the DVB-T demodulator 134 may enter a power saving mode between bursts in order to consume less power. Reference 144 indicates a control mechanism that handles the DVB-T demodulator 134 power via the time slicing block 138. The DVB-T demodulator 134 may also be adapted to utilize time slicing to monitor different transport streams from different channels. For example, the DVB-T demodulator 134 may utilize time slicing to monitor neighboring channels between bursts to optimize handover.

The MPE-FEC block 140 may comprise suitable circuitry, logic and/or code that may be adapted to provide error correction during decoding. On the encoding side, MPE-FEC encoding provides improved carrier to noise ratio (C/N), improved Doppler performance, and improved tolerance to interference resulting from impulse noise. During decoding, the MPE-FEC block 140 may be adapted to determine parity information from previously MPE-FEC encoded datagrams. As a result, during decoding, the MPE-FEC block 140 may generate datagrams that are error-free even in instances when received channel conditions are poor. The processing circuitry block 142 may comprise suitable processor, circuitry, logic and/or code that may be adapted to process IP datagrams generated from an output of the MPE-FEC block 140. The processing circuitry block 142 may also be adapted to process transport stream packets from the DVB-T demodulator 134.

In operation, the DVB-T demodulator 134 may be adapted to receive an input DVB-T RF signal, demodulate the received input DVB-T RF signal so as to generate data at a much lower bit rate. In this regard, the DVB-T demodulator 134 recovers MPEG-2 transport stream (TS) packets from the input DVB-T RF signal. The MPE-FEC block 140 may then correct any error that may be located in the data and the resulting IP datagrams may be sent to the processing circuitry block 142 for processing. Transport stream packets from the DVB-T demodulator 134 may also be communicated to the processing circuitry block 142 for processing.

FIG. 1f is a block diagram illustrating the sharing of a multiplexer (MUX) by a plurality of MPEG2 services, which may be utilized in connection with an embodiment of the invention. Referring to FIG. 1f, there is shown a transmitter block 150, a receiver block 151 and a channel 164. The transmitter block 150 may comprise a DVB-H encapsulator block 156, a multiplexer 158, and a DVB-T modulator 162. Also shown associated with the transmitter block 150 is a plurality of service data collectively referenced as 160. The receiver block 151 may comprise a DVB-H demodulator block 166 and a DVB-H decapsulation block 168.

The DVB-H encapsulator block 156 may comprise MPE block 156a, MPE-FEC block 156b and time slicing block 156c.

The multiplexer 156 may comprise suitable logic circuitry and/or code that may be adapted to handle multiplexing of IP encapsulated DVB-H data and service data. The plurality of service data collectively referenced as 160 may comprise MPEG-2 formatted data, which may comprise for example, audio, video and/or data.

The DVB-T modulator 162 may comprise suitable logic circuitry and/or code that may be adapted to generate an output RF signal from the transmitter block 150.

The DVB-H demodulator block 166 associated with the receiver block 151 is similar to the DVB-H demodulator block 132 of FIG. 1 e. The DVB-H decapsulation block 168 may comprise MPE block 168a, MPE-FEC block 168b and time slicing block 168c. The DVB-H decapsulation block 168 may comprise suitable logic, circuitry and/or code that may be adapted decapsulate the IP data that was encapsulated and multiplexed by the transmitter block 150. The output of the DVB-H demodulator 166 is the transport stream packets, which comprised the multiplexed output generated by the multiplexer 158.

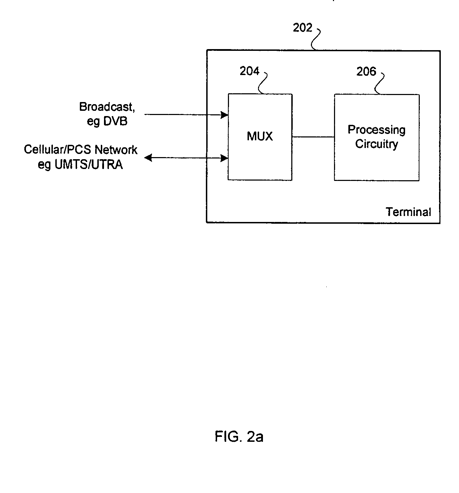

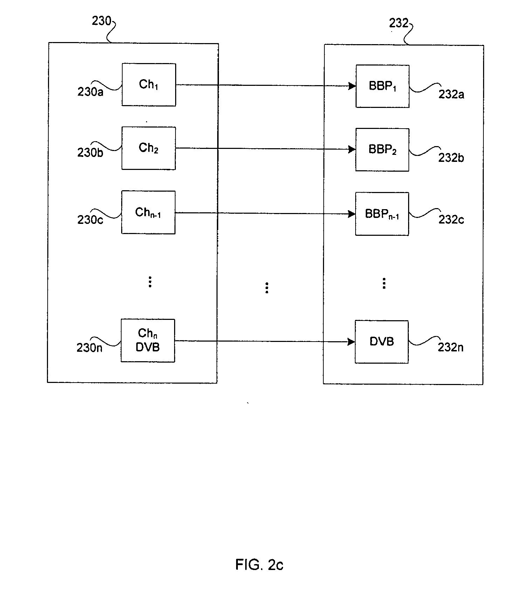

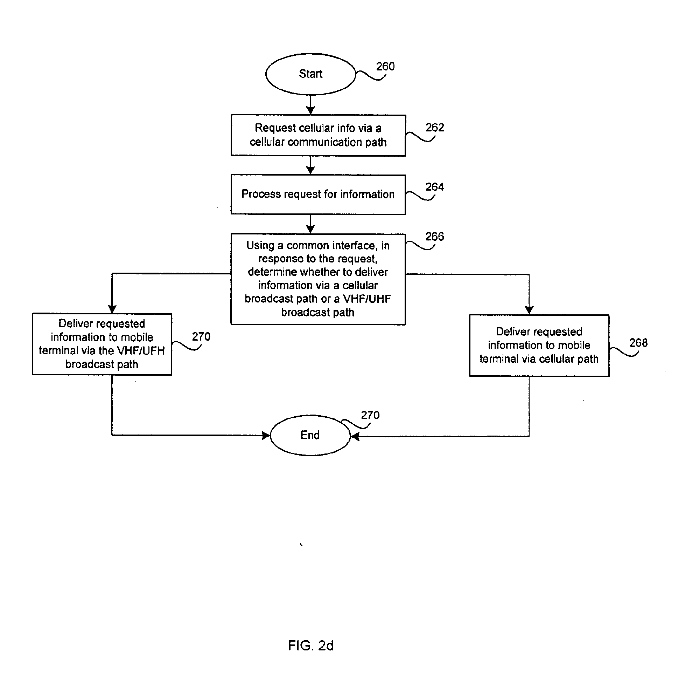

FIG. 2a is a block diagram of a mobile terminal that is adapted to receive VHF/UHF broadcasts and cellular communications, in accordance with an embodiment of the invention. Referring to FIG. 2a, there is shown mobile terminal (MT) or handset 202. The mobile terminal 202 may comprise multiplexer (MUX) 204 and processing circuitry 206.

The multiplexer 204 may comprise suitable logic circuitry and/or code that may be adapted to multiplex incoming signals, which may comprise VHF/UHF broadcast channel and at least one cellular channel. The cellular channel may be within the range of both cellular and PCS frequency bands.

The processing circuitry 206 may comprise, for example, an RF integrated circuit (RFIC) or RF front end (RFFE). In this regard, the processing circuitry 206 may comprise at least one receiver front end (RFE) circuit. A first of these circuits may be adapted to handle processing of the VHF/UHF broadcast channel and a second of these circuits may be adapted to handle a cellular channel. In an embodiment of the invention, a single RFIC may comprise a plurality of RFE processing circuits, each of which may be adapted to process a particular cellular channel. Accordingly, a single RFIC comprising a plurality of cellular RFE processing circuits may be adapted to handle a plurality of cellular channels. In one embodiment of the invention, a plurality of VHF/UHF RFE processing circuits may be integrated in a single RFIC. In this regard, a mobile terminal may be adapted to simultaneously handle a plurality of different VHF/UHF channels. For example, a mobile terminal may be adapted to simultaneously receive a first VHF/UHF channel bearing video and a second VHF/UHF channel bearing audio.

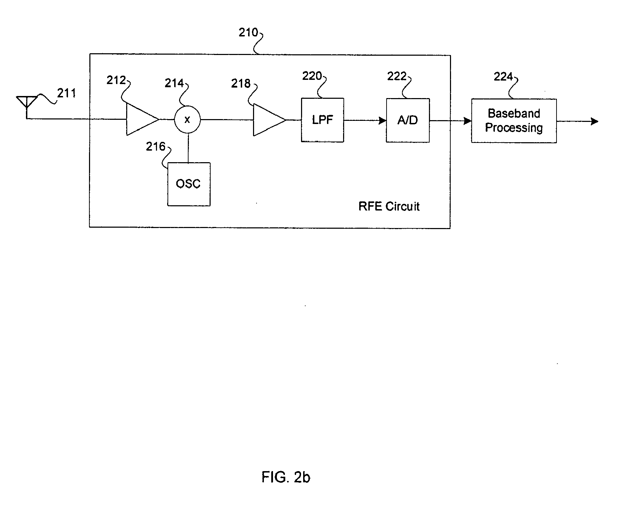

FIG. 2b is a block diagram illustrating receive processing circuit of an RF integrated circuit (RFIC), in accordance with an embodiment of the invention. Referring to FIG. 2b, there is shown antenna 211, receiver front end (RFE) circuit 210, and baseband processing block 224. The receiver front end (RFE) circuit 210 may comprise a low noise amplifier (LNA) 212, a mixer 214, an oscillator 216, a low noise amplifier or amplifier or amplifier 218, a low pass filter 220 and an analog-to-digital converter (A/D) 222.

The antenna 211 may be adapted to receive at least one of a plurality of signals. For example, the antenna 211 may be adapted to receive a plurality of signals in the GSM band, a plurality of signals in the WCDMA and and/or a plurality of signals in the VHF/UHF band. United States Application Serial No. __________ (Attorney Docket No. 16343US01), United States Application Serial No. __________ (Attorney Docket No. 16344US01), United States Application Serial No. __________ (Attorney Docket No. 16345US01), all of which are filed on even date herewith and disclose various antenna configurations that may be utilized for a plurality of operating frequency bands.

The receiver front end (RFE) circuit 210 may comprise suitable circuitry, logic and/or code that may be adapted to convert a received RF signal down to baseband. An input of the low noise amplifier 212 may be coupled to the antenna 211 so that it may receive RF signals from the antenna 211. The low noise amplifier 212 may comprise suitable logic, circuitry, and/or code that may be adapted to receive an input RF signal from the antenna 211 and amplify the received RF signal in such a manner that an output signal generated by the low noise amplifier 212 has a very little additional noise.

The mixer 214 in the RFE circuit 210 may comprise suitable circuitry and/or logic that may be adapted to mix an output of the low noise amplifier 212 with an oscillator signal generated by the oscillator 216. The oscillator 216 may comprise suitable circuitry and/or logic that may be adapted to provide a oscillating signal that may be adapted to mix the output signal generated from the output of the low noise amplifier 212 down to a baseband. The low noise amplifier (LNA) or amplifier 218 may comprise suitable circuitry and/or logic that may be adapted to low noise amplify and output signal generated by the mixer 214. An output of the low noise amplifier or amplifier 218 may be communicated to the low pass filter 220. The low pass filter 220 may comprise suitable logic, circuitry and/or code that may be adapted to low pass filter the output signal generated from the output of the low noise amplifier 220. The low pass filter block 220 retains a desired signal and filters out unwanted signal components such as higher signal components comprising noise. An output of the low pass filter 220 may be communicated to the analog-digital-converter for processing.

The analog-to-digital converter (A/D) 222 may comprise suitable logic, circuitry and/or code that may be adapted to convert the analog signal generated from the output of the low pass filter 220 to a digital signal. The analog-to-digital converter 222 may generate a sampled digital representation of the low pass filtered signal that may be communicated to the baseband-processing block 224 for processing. The baseband processing block 224 may comprise suitable logic, circuitry and/or code that may be adapted to process digital baseband signals received form an output of the A/D 222. Although the A/D 222 is illustrated as part of the RFE circuit 210, the invention may not be so limited. Accordingly, the A/D 222 may be integrated as part of the baseband processing block 224. In operation, the RFE circuit 210 is adapted to receive RF signals via antenna 211 and convert the received RF signals to a sampled digital representation, which may be communicated to the baseband processing block 224 for processing.

FIG. 2c is a high-level block diagram illustrating an exemplary configuration for a RFIC and a base band processing circuit, in accordance with an embodiment of the invention. Referring to FIG. 2c, there is shown RFIC 230 and baseband circuitry 232. The RFIC 230 comprises a plurality of RF processing circuits 230a, 230b, 230c and 230n. The RF processing circuits 230a, 230b, 230c and 230n may be integrated in a single integrated circuit (IC) or chip. The baseband processing circuitry 232 comprises a plurality of baseband processing circuits 232a, 232b, 232c and 232n. The baseband processing circuits 232a, 232b, 232c and 232n may be integrated into a single integrated circuit (IC) or chip.

In operation, each of the RF processing circuits in the RFIC 230 may be adapted to process a single channel. For example, each of the RF processing circuits 230a, 230b and 230c may be adapted to process separate cellular channel, namely, channel 1, channel 2 and channel (n-1), respectively. The RF processing circuit 230n many be adapted to process a VHF/UHF broadcast channel n.

Each of the baseband processing circuits in the baseband processing circuitry 230 may be adapted to process a single channel. For example, each of the baseband processing circuits 232a, 232b and 232c may be adapted to process separate cellular channels, namely, channel 1, channel 2 and channel (n-1), respectively. The RF processing circuit 232n may be adapted to process a VHF/UHF broadcast channel n. Use of a single RFIC and a single baseband processing integrated circuit saves on the size of the processing circuitry, which may significantly reduce cost.

FIG. 2d is a flowchart illustrating exemplary steps that may be utilized in connection with an embodiment of the invention. Referring to FIG. 2d, in step 262, the a mobile terminal may request cellular information via a cellular communication path. In step 264, the request for information may be processed. In step 266, in response to the request, it may be determined whether to deliver information via a cellular broadcast path or a VHF/UHF broadcast path. In step 268, based on the determination in step 266, the requested information may be delivered to the mobile terminal via the cellular broadcast path. In step 270, based on the determination in step 266, the requested information may be delivered to the mobile terminal via the VHF/UHF broadcast path.

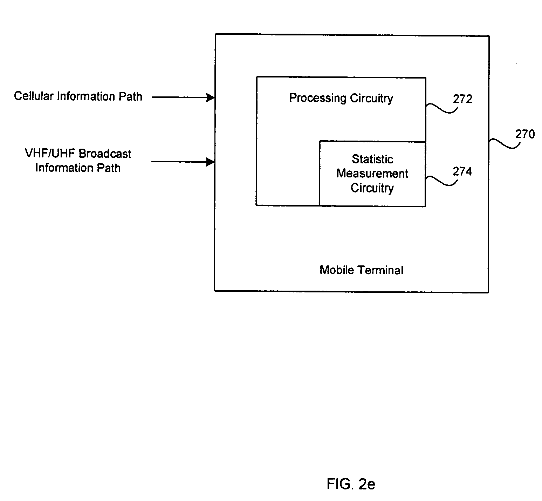

FIG. 2e is a diagram of an exemplary mobile terminal that may be utilized for communicating information via a plurality of different networks, in accordance with an embodiment of the invention. Referring to FIG. 2e, there is shown a mobile terminal 270 comprising processing circuitry 272. The processing circuitry 272 may comprise statistic measurement circuitry 274.

In operation, the mobile terminal 270 may be adapted to receive cellular information via a cellular information path and VHF/UHF broadcast information via a VHF/UHF broadcast information path. The mobile terminal 270 may switch between processing the broadcast information received via the VHF/UHF broadcast communication path and the cellular information received via the cellular communication path. The switching may be based on a measured broadcast signal statistic associated with a signal bearing the broadcast information and a measured cellular signal statistic associated with a signal bearing the cellular information. The measured broadcast signal statistic and/or the measured cellular signal statistic may comprise exemplary information such as received signal strength indication (RSSI), SNR, signal quality, and/or other channel related information.

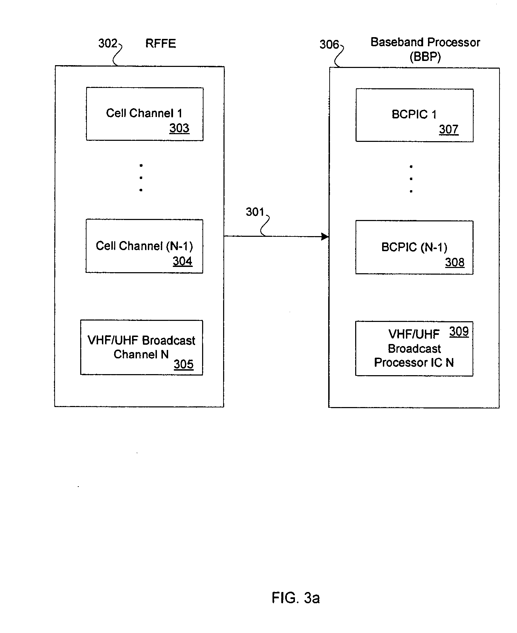

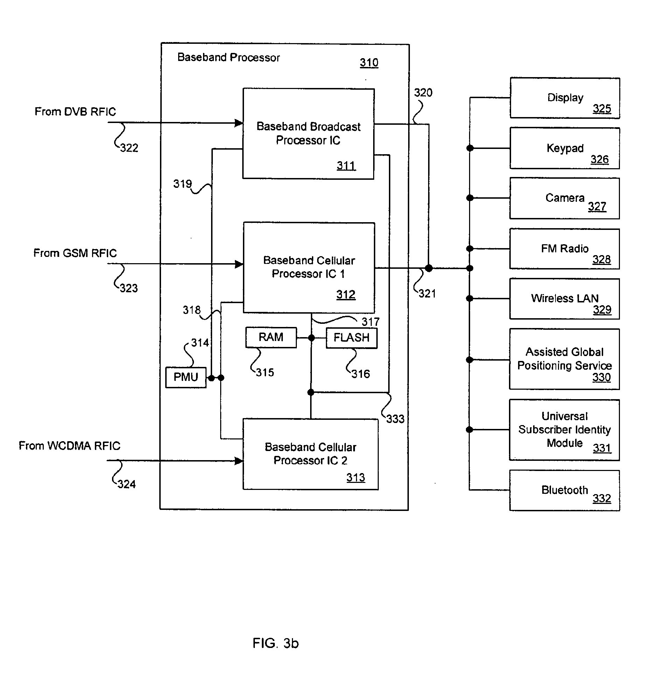

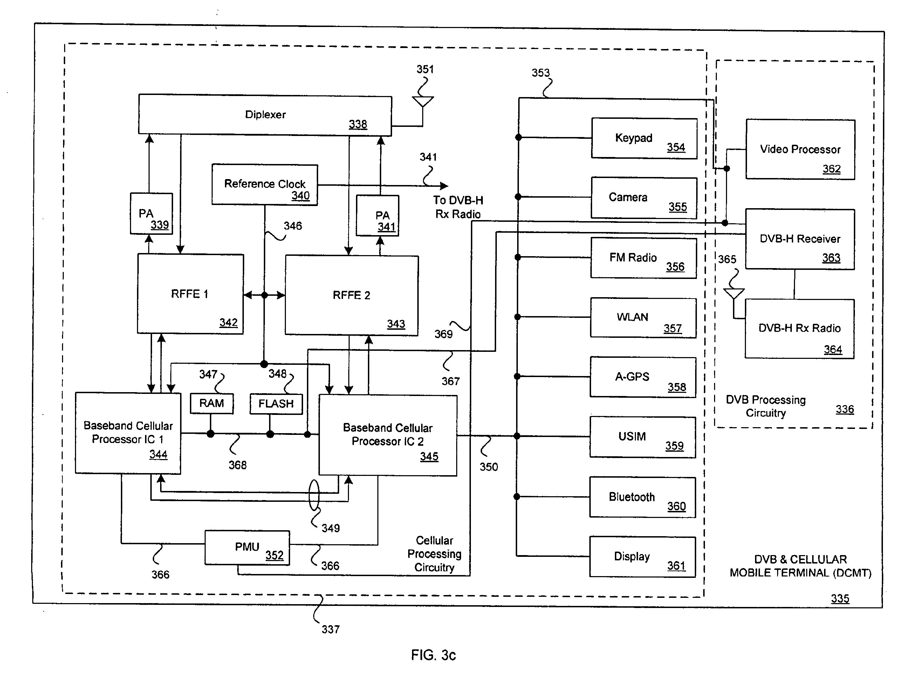

FIG. 3a is a block diagram illustrating an exemplary radio frequency front end (RFFE) and baseband processor (BBP), in accordance with an embodiment of the invention. Referring to FIG. 3a, there is shown an RFFE 302 and a BBP 306. The RFFE 302 and the BBP 306 may exchange baseband signals across a channel interface 301. The RFFE 302 may comprise a plurality of N-1 cellular RFFE processing circuits 1, ..., (N-1), referenced as 303, ..., 304, and a VHF/UHF broadcast RFFE processing circuit referenced as 305. Each of the plurality of N-1 cellular RFFE processing circuits 303, ..., 304 may individually receive radio frequency (RF) signals associated with at least one of a plurality of cellular frequency band communications services, such as GSM, GPRS, EDGE, W-CDMA, HSDPA, and/or MBMS. The VHF/UHF broadcast RFFE processing circuit 305 may select from a plurality of channels in the VHF and/or UHF bands. The VHF/UHF broadcast RFFE processing circuit 305 may be adapted to simultaneously receive a plurality of VHF/UHF channels. The plurality of N-1 cellular RFFE processing circuits 303, ..., 304 may be adapted to process RF signals at cellular frequency band channel frequencies, for example, received from an antenna, to baseband frequency. The VHF/UHF channel 305 may process RF signals at VHF/UHF band channel frequencies to baseband frequency, for example. The RFFE processing circuits 303, ..., 304, and 305 may each be implemented in a plurality of radio frequency ICs (RFICs).

The BBP 306 may comprise a plurality of, or N-1, baseband cellular processor integrated circuits (BCPICs) 307, ..., 308, and at least one single broadcast processor integrated circuit (IC) 309. In operation, the BCPICs 307, ..., 308 may be adapted to process baseband signals associated with the plurality of N-1 cellular RFFE processing circuits 303,...,304, respectively. Each of the BCPIC 307, ..., 308 may comprise at least one baseband processing circuit and may be adapted to process at least one of a plurality of baseband signals associated with cellular frequency band communications services. For example, each of the N-1 BCPICs 307, ..., 308 may individually process baseband signals associated with at least one of a plurality of cellular frequency band communications services comprising GSM, GPRS, EDGE, W-CDMA, HSDPA, and MBMS.

The at least one single broadcast processor IC 309 may process baseband signals associated with the VHF/UHF broadcast channel 305, for example. The at least one single broadcast processor IC 309 may also process multiprotocol encapsulated (MPE) data sent in a datacast over a broadcast network, for example. In one aspect of the invention, the BCPICs 307, ..., 308 may be adapted to communicate and/or share a single memory with the VHF/UHF broadcast processor IC 309. The single memory may be coupled to the BCPICs 307, ..., 308 and the single broadcast processing integrated circuit 309 via a memory interface. The memory interface may comprise an asynchronous SRAM interface and/or a synchronous SDRAM interface, and may be utilized to facilitate communication between the BCPICs 307, ..., 308 and the single broadcast processing integrated circuit 309 during signal processing. For example, a synchronous SDRAM connection for high-speed data transfer may be utilized between at least one of the BCPICs 307, ..., 308 and the single broadcast processing integrated circuit 309, and an asynchronous SRAM interface may be utilized between the BCPICs 307, ..., 308, the single broadcast processing integrated circuit 309, and the single memory.

The processed signals from the plurality of BCPICs 307, ..., 308 and the single broadcast processor IC 308 may be presented to a user of a mobile terminal via an input/output device. The plurality of BCPICs 307, ..., 308 and the baseband broadcast processor IC 308 may have interactions at the mobile terminal input/output device.

FIG. 3b is a block diagram illustrating exemplary connection for a plurality of baseband cellular processor ICs and at least one baseband broadcast processor IC, in accordance with an embodiment of the invention. Referring to FIG. 3b, there is shown a baseband processor 310 and a plurality of peripherals interfaced to the baseband processor 310. The baseband processor 310 may comprise a plurality of baseband cellular processor integrated circuits (BCPICs), such as BCPICs 312 and 313, and a baseband broadcast processor integrated circuit (BBPIC) 311. The baseband processor 310 may also comprise memory such as a FLASH memory 316 and random access memory (RAM) 315, memory interfaces 317 and 333, a power management unit (PMU) 314, and control interfaces 318 and 319. The plurality of peripherals may comprise a display 325, a keypad 326, a camera 327, a frequency modulation (FM) radio 328, a wireless local area network (WLAN) 329, an assisted global positioning service (A-GPS) 330, a universal subscriber identity module (USIM) 331, and a Bluetooth connection module 332.

In an exemplary aspect of the invention, the BCPIC 312 may comprise a GSM/GPRS/EDGE baseband cellular processor and the BCPIC 313 may comprise a WCDMA/HSDPA baseband cellular processor. The BBPIC 311 may comprise a VHF/UHF broadcast baseband processing IC such as a DVB-H receiver, and/or an MPEG-2/4 decoder, for example. The BCPICs 312 and 313 may communicate over the channel interfaces 323 and 324, respectively, with cellular RFICs. For example, the BCPIC 312 may communicate with a GSM RFIC via channel interface 323, and BCPIC 313 may communicate with a WCDMA RFIC via channel interface 324. The BBPIC 311 may communicate with a DVB RFIC, for example, via channel interface 322.

The FLASH memory 316 may comprise suitable logic and/or circuitry that may be adapted to store data and/or code in a non-volatile manner, where each memory address may be written multiple times, and the contents of each memory address may be randomly accessed. The RAM 315 may comprise suitable logic and/or circuitry that may be adapted to store data and/or code in a volatile manner, where each memory address may be written multiple times, and each memory address may be randomly accessed for read and write operations.

In an exemplary aspect of the invention, the BCPICs 312 and 313 may be adapted to communicate and/or share the RAM 315 and/or the FLASH memory 316 with the BBPIC 311. The RAM 315 and the FLASH memory 316 may be coupled to the BCPICs 312 and 313 and the BBPIC 311 via memory interfaces 317 and/or 333. Memory interfaces 317 and 333 may comprise an asynchronous SRAM interface and/or a synchronous SDRAM interface, and may be utilized to facilitate communication between BCPIC 312, BCPIC 313, BBPIC 311, and the RAM 315 and/or the FLASH memory 316 during signal processing. For example, a synchronous SDRAM connection for high-speed data transfer may be utilized between at least one of the BCPICs 312 and 313 and the BBPIC 311. An asynchronous SRAM interface may be utilized between the BCPICs 312 and 313 and the RAM 315 and/or the FLASH memory 316.

The PMU 314 may comprise suitable logic, circuitry and/or code that may be adapted to manage power consumption for various devices and/or circuits. In one aspect of the invention, the PMU 314 may be adapted to manage power consumption in the BCPICs 312 and 313, as well as power consumption by BBPIC 311. The control interface 318 may comprise suitable logic and/or circuitry that may be adapted to enable communication between the PMU 314 and the BCPICs 312 and 313. Similarly, the control interface 319 may comprise suitable logic and/or circuitry that may be adapted to enable communication between the PMU 314 and the BBPIC 311. The control interfaces 318 and 319 may comprise an inter-integrated circuit (I²C) bus and/or a general-purpose input/output (GPIO) pins. The I²C bus may comprise a serial communication link between IC devices. In operation, the PMU 314 may utilize the control interfaces 318 and 319 to instruct at least one of the BCPIC 312, BCPIC 313 and/or BBPIC 311 to temporarily shut down one or more operational modes to reduce power consumption to extend battery life in a mobile terminal, for example.

The plurality of peripherals 325, ..., 332 may provide input to, or receive output from, at least one of the BCPIC 312, BCPIC 313 and/or BBPIC 311. For example, the WLAN peripheral 329 may provide communication access to a wireless local area network (WLAN) and the Bluetooth® peripheral 332 may provide communication access to Bluetooth® devices. The USIM peripheral 331 may comprise a universal subscriber identity module (USIM), in which the USIM may contain relevant information that may be utilized to enable a user to receiver services from a GSM network, for example. Interfaces 320 and 321 may couple BCPIC 312, BCPIC 313 and/or BBPIC 311, and the plurality of peripherals 325, ..., 332. The interfaces 320 and 321 may comprise suitable logic and/or circuitry that may be adapted to enable communication between the BCPIC 312, BCPIC 313 and/or BBPIC 311, and the plurality of peripherals 325, ..., 332. In an exemplary aspect of the invention, the interfaces 320 and 321 may comprise serial interfaces.

The RAM 315 and the FLASH memory 316 may be accessible by the BCPICs 312 and 313 and BBPIC 311 via the memory interfaces 317 and/or 333. The FLASH memory 316 may contain machine-readable code that may be executed by BCPIC 312, BCPIC 313, and/or BBPIC 311 within a mobile terminal to perform tasks related to the execution of signaling protocols with a cellular communications network for the establishment of cellular frequency band communication services between the mobile terminal and a cellular communications network, for example. The FLASH memory 316 may also store persistent data, which is to be maintained at a mobile terminal even after the mobile terminal has been powered off and subsequently powered on. Exemplary persistent data at a mobile terminal may comprise a telephone number, for example, or any other information used by a network to uniquely identify the mobile terminal. The RAM 315 may be utilized by BCPICs 312 and 313 and BBPIC 311 to store non-persistent data, which may be lost if the mobile terminal is powered off and subsequently powered on. Exemplary non-persistent data may comprise data utilized to maintain connection states for active connections, for example. Such information may be deleted from memory upon termination of the associated connection to the network.

In operation, the BCPICs 312 and 313 may receive baseband cellular signals via the channel interfaces 323 and 324, and process the received baseband signals that may be associated with a plurality of cellular frequency band communications services. The BBPIC 311 may receive baseband broadcast signals via the channel interface 322, and process the received baseband broadcast signals that may be associated with VHF/UHF band broadcast services, for example. The BBPIC 311 may also be adapted to process multiprotocol encapsulated (MPE) data sent in a datacast over a broadcast network. The processed broadcast and/or cellular signals from BBPIC 311, BCPIC 312, and/or BCPIC 313 may be presented to a user of a mobile terminal via an input/output (I/O) device.

Even though the baseband processor comprises one baseband broadcast processor integrated circuit and two baseband cellular processor integrated circuits, the present invention may not be so limited. Additional baseband broadcast processor integrated circuits and/or baseband cellular processor integrated circuits may also be utilized, where each BBPIC and/or BCPIC may be adapted to process one or more types of signals received from one or more types of RFICs, for example. In addition, one or more of the BBPICs may communicate with, and/or may share a single memory with, one or more of the BCPICs. The single memory may be coupled to the BBPICs and BCPICs via a memory interface, where the memory interface may comprise an asynchronous SRAM interface and/or a synchronous SDRAM interface, for example.

FIG. 3c is a block diagram illustrating exemplary processing circuit for a mobile terminal, in accordance with an embodiment of the invention. Referring to FIG. 3c, there is shown a DVB and cellular mobile terminal (DCMT) 335. The DCMT 335 may comprise cellular processing circuitry 337 and DVB processing circuitry 336. The cellular processing circuitry 337 may comprise BCPICs 344 and 345, a FLASH memory 348, a RAM 347, memory interfaces 368 and 367, a PMU 352, a plurality of peripherals 354, ..., 361, an antenna 351, a diplexer 338, power amplifiers (PAs) 339 and 341, RFFEs 342 and 343, and a reference clock 340. The DVB processing circuitry 336 may comprise a video processor 362, a DVB-H receiver IC 363, a DVB-H receiver front end (RFE) 364, and antenna 365.

The antennas 351 and 365 may comprise suitable interface logic and/or circuitry that may be adapted to receive and/or transmit RF signals. The diplexer 338 may comprise suitable logic and/or circuitry that may be adapted to isolate received signals from transmitted signals. This may prevent received signals from being corrupted by the much stronger transmitted signals. The diplexer 338 may also allow transmission of signals from multiple RFFEs, such as the RFFEs 342 and 343, to the same transmission antenna, such as antenna 351. In one aspect of the invention, antenna 351 may be adapted to receive and/or transmit cellular signals, and antenna 365 may be adapted to receive and/or transmit broadcast signals.

The reference clock 340 may comprise suitable logic and/or circuitry that may be adapted to provide clocking signal 346 to the RFFEs 342 and 343 and the BCPICs 344 and 345, and a clocking signal 341 to the DVB-H RFE 364. The clocking signals 341 and 346 may be utilized by various devices, for example, analog-to-digital converters, digital-to-analog converters, and/or latching devices that may receive digital data. The PAs 339 and 341 may comprise suitable logic and/or circuitry that may be adapted to amplify an analog signal sufficiently so that when the analog signal is transmitted by an antenna, for example antenna 351, the transmitted signal may have sufficient strength that it may appear as a valid signal to a device receiving the transmitted signal, such as a cellular base station.

The RFFEs 342 and 343 may comprise suitable logic, circuitry, and/or code that may be adapted to receive a digital baseband signal, convert it to an analog signal, and upconvert it to RF frequency so that it may be transmitted by an antenna, for example antenna 351. The RFFEs 342 and 343, as well as the DVB-H RFE 364, may comprise suitable logic, circuitry, and/or code that may be adapted to receive a RF signal from an antenna, such as antennas 351 and/or 365, downconvert the received RF signal to an analog baseband signal, and convert the analog baseband signal to a digital baseband signal for further processing.

The FLASH memory 348 may comprise suitable logic and/or circuitry that may be adapted to store data and/or code in a non-volatile manner, where each memory location may be written multiple times, and the contents of each memory location may be randomly accessed. The RAM 347 may comprise suitable logic and/or circuitry that may be adapted for storing data and/or code in a volatile manner, where each memory location may be written multiple times, and each memory location may be randomly accessed for read and/or write operations.

In an exemplary aspect of the invention, the BCPICs 344 and 345 may be adapted to communicate and/or share the RAM 347 and/or the FLASH memory 348 with the DVB-H receiver IC 363 in the DVB processing circuitry 336. The RAM 347 and the FLASH memory 348 may be coupled to the BCPICs 344 and 345 and the DVB-H receiver IC 363 via memory interfaces 367 and/or 368. Memory interfaces 367 and 368 may comprise an asynchronous SRAM interface and/or a synchronous SDRAM interface, and may be utilized to facilitate communication between BCPIC 344, BCPIC 345, DVB-H receiver IC 363, and the RAM 347 and/or the FLASH memory 348 during signal processing. For example, a synchronous SDRAM connection for high-speed data transfer may be utilized between at least one of the BCPICs 344 and 345 and the DVB-H receiver IC 363. An asynchronous SRAM interface may be utilized between the BCPICs 312 and 313 and the RAM 315 and/or the FLASH memory 316.

The PMU 352 may comprise suitable logic, circuitry and/or code that may be adapted to manage power consumption for various devices. The control interfaces 366 and 369 may comprise suitable logic and/or circuitry that may be adapted to enable communication between the PMU 352 and the BCPICs 344 and 345, as well as between the PMU 352 and the video processor 362 and the DVB-H receiver 363. The control interfaces 366 and 369 may comprise a serial communication link, such as an inter-integrated circuit (I²C) bus. The PMU 352 may utilize the control interfaces 366 and 369 to instruct the BCPIC 344, the BCPIC 345, the video processor 362, and/or the DVB-H receiver 363, for example, to temporarily shut down one or more operational modes to reduce power consumption to extend battery life in a mobile terminal.

The plurality of peripherals 354, ..., 361 may provide input to, or receive output from, the BCPICs 344 and 345, the DVB-H receiver IC 363, and/or the video processor 362. For example, the peripheral 357 may provide communication access to a wireless local area network (WLAN) and the peripheral 360 may provide communication access to Bluetooth devices. The peripheral 359 may comprise a universal subscriber identity module (USIM), in which the USIM may contain relevant information that enable a user to receive services from a GSM network, for example. An interface 350 may couple the BCPICs 344 and 345 and the peripherals 354, ..., 361, and an interface 353 may couple the DVB-H receiver IC 363, the video processor 362, and the peripherals 354, ..., 361. The interfaces 350 and 353 may comprise suitable logic and/or circuitry that may be adapted to enable communication between the BCPICs 344 and 345, the DVB-H receiver IC 363, and the video processor 362 and the peripherals 354, ..., 361.

The RAM 347 and the FLASH memory 348 may be accessible by the BCPICs 344 and 345 and the DVB-H receiver IC 363 via memory interfaces 367 and/or 368. The FLASH memory 348 may contain machine-readable code that may be executed by BCPIC 344, BCPIC 345, and/or the DVB-H receiver IC 363 within a mobile terminal to perform tasks related to the execution of signaling protocols with a cellular communications network for the establishment of cellular frequency band communication services between the mobile terminal and a cellular communications network, for example. The FLASH memory 348 may also store persistent data, which is to be maintained at a mobile terminal even after the mobile terminal has been powered off and subsequently powered on. Exemplary persistent data at a mobile terminal may comprise a telephone number, for example, or any other information used by a network to uniquely identify the mobile terminal. The RAM 347 may be utilized by BCPICs 344 and 345 and the DVB-H receiver IC 363 to store non-persistent data, which may be lost if the mobile terminal is powered off and subsequently powered on. Exemplary non-persistent data may comprise data utilized to maintain connection states for active connections, for example. Such information may be deleted from memory upon termination of the associated connection to the network.

The BCPICs 344 and 345 may be adapted to process baseband signals associated with a plurality of cellular frequency band communications services. BCPIC 344 may comprise a GSM/GPRS/EDGE processor IC and BCPIC 345 may comprise HSDPA/WCDMA processor IC. BCPICs 344 and 345 may be coupled to each other via a bidirectional bus 349. The DBV-H receiver 363 and the video processor 362 may be adapted to process baseband signals associated with VHF/UHF band broadcast services. The DVB-H receiver 363 may also process multiprotocol encapsulated (MPE) data sent in a datacast over a broadcast network. The video processor 362 may comprise an MPEG-2/4 decoder. The processed signals from the BCPICs 344 and 345, the DVB-H receiver IC 363, and the video processor 362 may be presented to a user of a mobile terminal via an input/output device.

In operation, a RF signal may be received by the antenna 351, and the received RF signal may be communicated to the diplexer 338. The diplexer 338 may communicate the signal to the RFFEs 342 and 343, and the RFFEs 342 and 343 may communicate digital baseband signals to the BCPICs 344 and 345. Similarly, a RF signal may be received by the antenna 365 in the DVB-H RFE 364, and the received RF signal may be communicated to the DVB-H receiver 363. The receiver 363 may communicate a digital baseband signal to the video processor 362. The video processor 362 may process the digital baseband signals as described with respect to FIG. 3b, for example.

During transmission, the BCPICs 344 and 345 may communicate digital baseband signals to at least one of the RFFEs 342 and 343. The RFFEs 342 and 343 may convert the digital baseband signals to analogs signals, and then upconvert the analog signals to RF signals. The RF signals may then be communicated to the PAs 339 and 341, respectively, by the RFFEs 342 and 343. The PAs 339 and 341 may amplify the RF signals and may communicate the amplified RF signals to the diplexer 338. The diplexer 338 may combine the amplified RF signals and communicate the combined RF signal to the antenna 351 for transmission. The PMU 352, the FLASH memory 348, the RAM 347, and the plurality of peripherals 354, ..., 361 may function as described with regard to FIG. 3b or FIG. 3c, for example.

Even though the DCMT 335 comprises a single DVB-H receiver with video processor and two baseband cellular processor integrated circuits, the present invention may not be so limited. Additional baseband broadcast processor integrated circuits, implemented with a plurality of DVB-H receivers and video processors, and/or additional baseband cellular processor integrated circuits may also be utilized, where each BBPIC and/or BCPIC may be adapted to process one or more types of signals received from one or more types of RFICs, for example. In addition, one or more of the BBPICs may communicate with, and/or may share a single memory with, one or more of the baseband broadcast processor integrated circuits. The single memory may be coupled to the BBPICs and the baseband broadcast processor integrated circuits via a memory interface, where the memory interface may comprise an asynchronous SRAM interface and/or a synchronous SDRAM interface.

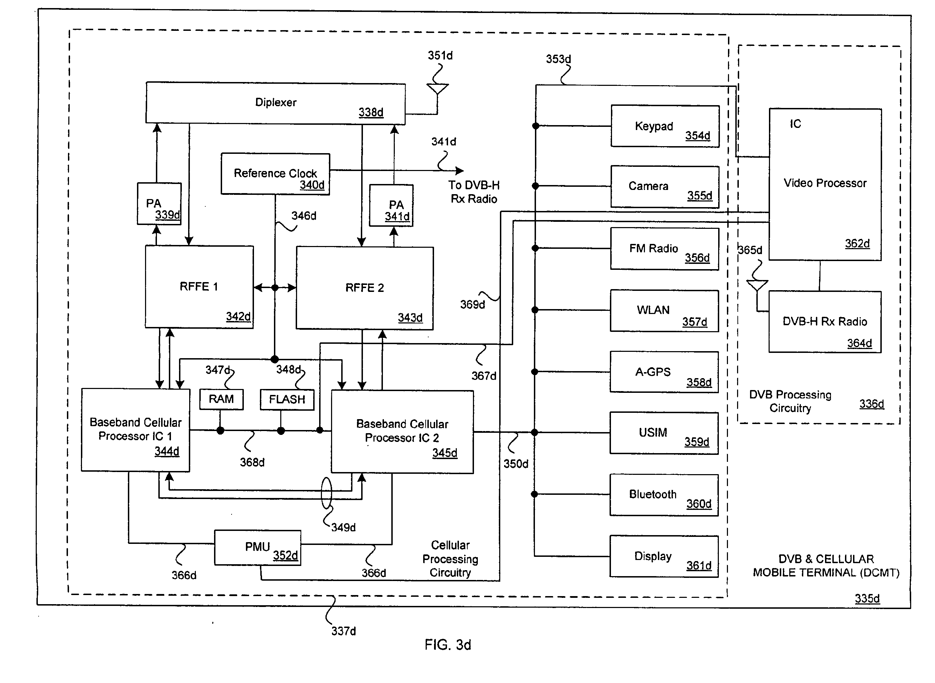

FIG. 3d is a block diagram illustrating exemplary processing circuit for a mobile terminal, in accordance with an embodiment of the invention. Referring to FIG. 3d, there is shown a DVB and cellular mobile terminal (DCMT) 335d. The DCMT 335d may comprise cellular processing circuitry 337d and DVB processing circuitry 336d. The cellular processing circuitry 337d may comprise BCPICs 344d and 345d, a FLASH memory 348d, a RAM 347d, memory interfaces 367d and 368d, a PMU 352d, a plurality of peripherals 354d, ..., 361d, an antenna 351d, a diplexer 338d, power amplifiers (PAs) 339d and 341d, RFFEs 342d and 343d, and a reference clock 340d. The DVB processing circuitry 336d may comprise a video processor 362d, a DVB-H receiver front end (RFE) 364d, and an antenna 365d. The diagram of FIG. 3d is somewhat similar to the diagram of FIG. 3c with the exception that FIG. 3d has the DVB-H receiver integrated on the same IC as the video processor. In this regard, the video processor IC 362d may comprise an MPEG-2/4 decoder and/or a DVB-H receiver, such as the DVB-H receiver 363 of FIG. 3c.

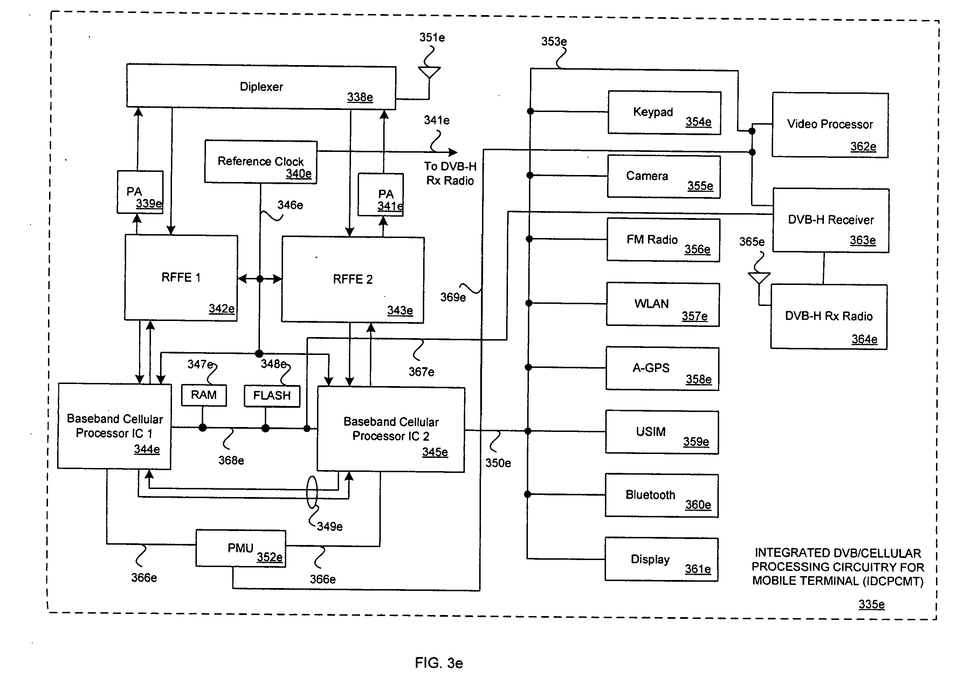

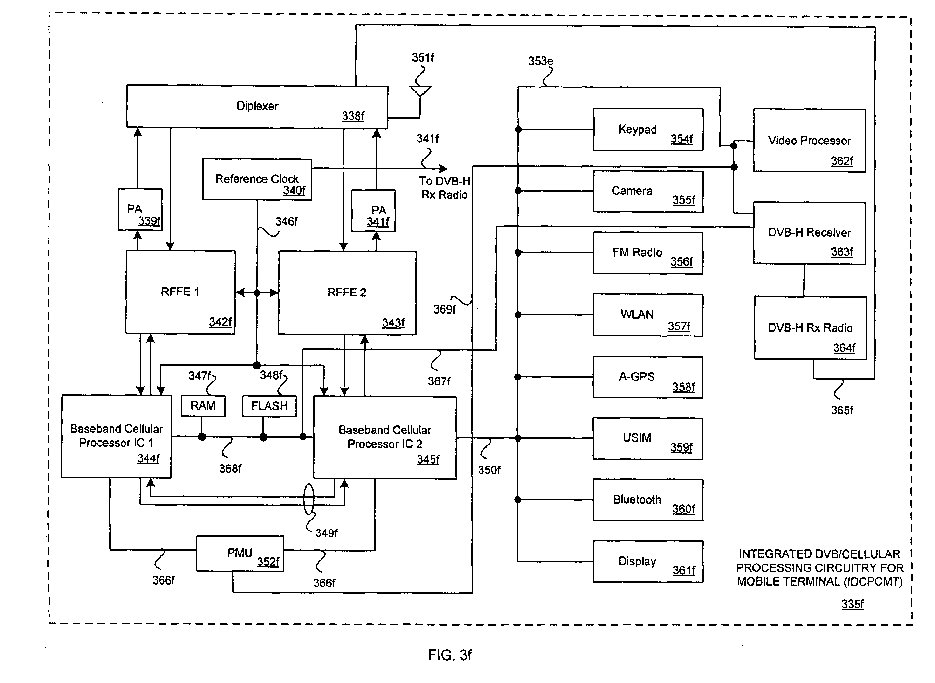

FIG. 3e is a block diagram illustrating exemplary integrated DVB and cellular processing circuitry for mobile terminal (DCPCMT) utilizing a plurality of receive antennas, in accordance with an embodiment of the invention. Referring to FIG. 3e, there is shown a DCPCMT 335e. The DCPCMT 335e may comprise BCPICs 344e and 345e, a FLASH memory 348e, a RAM 347e, memory interfaces 367e and 368e, a PMU 352e, a plurality of peripherals 354e, ..., 361e, antennas 351e and 365e, a diplexer 338e, power amplifiers (PAs) 339e and 341e, RFFEs 342e and 343e, a reference clock 340e, a video processor 362e, a DVB-H receiver 363e, and a DVB-H receiver front end (RFE) 364e. The diagram of FIG. 3e is somewhat similar to the diagram of FIG. 3c with the exception that FIG. 3e has the DVB processing circuitry and the cellular processing circuitry for a mobile terminal integrated on a single IC.

FIG. 3f is a block diagram illustrating exemplary integrated DVB and cellular processing circuitry for mobile terminal (DCPCMT) utilizing a single receive antenna, in accordance with an embodiment of the invention. Referring to FIG. 3f, there is shown a DCPCMT 335f. The DCPCMT 335f may comprise BCPICs 344f and 345f, a FLASH memory 348f, a RAM 347f, memory interfaces 367f and 368f, a PMU 352f, a plurality of peripherals 354f, ..., 361f, an antenna 351f, a diplexer 338f, power amplifiers (PAs) 339f and 341f, RFFEs 342f and 343f, a reference clock 340f, a video processor 362f, a DVB-H receiver 363f, and a DVB-H receiver front end (RFE) 364f. The diagram of FIG. 3f is somewhat similar to the diagram of FIG. 3e with the exception that FIG. 3f has the DVB-H RFE 364f without an antenna. In this regard, RF signals within the DCPCMT 335f may be received and/or transmitted via antenna 351f. With regard to broadcast-related received signals, after the RF signal is received by the antenna 351f and the diplexer 338f, the signal may be communicated for processing to the DVB-H RFE 364f via the connection 365f. Similarly, with regard to broadcast-related signals for transmission, the signal may be communicated by the DVB-H RFE 364f via the connection 365f to the diplexer 338f. The signal may then be transmitted via the antenna 351f.

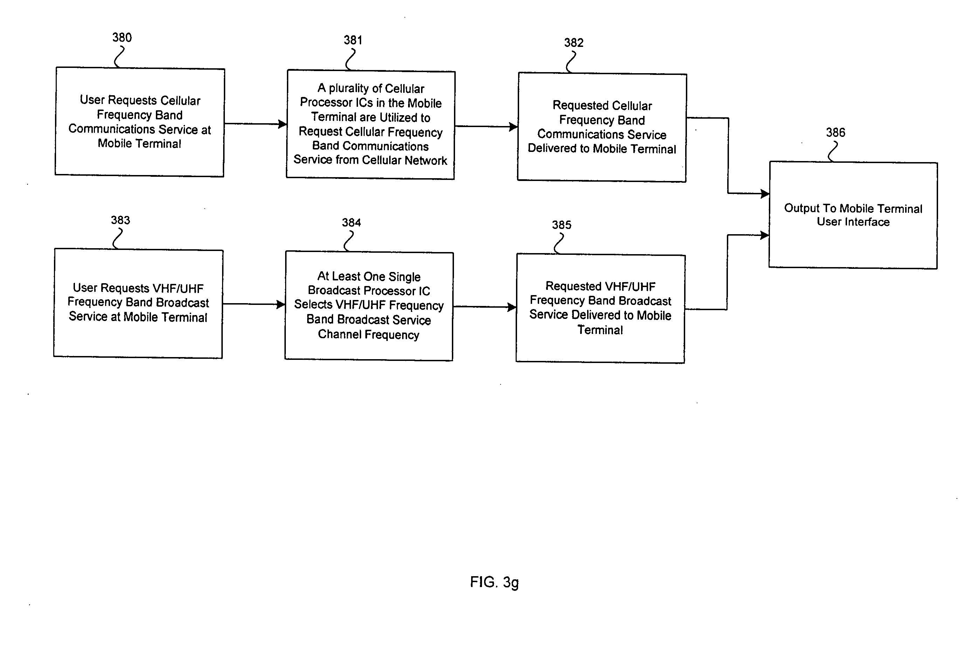

FIG. 3g is an exemplary flow diagram illustrating reception of cellular frequency band communications services and VHF/UHF band broadcast services at a mobile terminal, in accordance with an embodiment of the invention. In FIG. 3g, the mobile terminal may obtain services from one or more cellular networks and/or from one or more broadcast networks. Referring to FIG. 3g, in 380, a user may request cellular frequency band communications service at a mobile terminal. In 381, a plurality of cellular processor ICs in the mobile terminal may be utilized to request cellular frequency band communications service from a cellular network. In 382, the requested cellular frequency band communications service may be delivered to the mobile terminal. In 386, output may be communicated to a mobile terminal user interface, for example.

In 383, a user may request a VHF/UHF frequency band broadcast service at a mobile terminal. In 384, at least one single broadcast processor IC may select the VHF/UHF channel frequency for the requested broadcast service. In 385, the requested VHF/UHF frequency band broadcast service may be delivered to the mobile terminal. In 386, output may be communicated to the mobile terminal user interface. Output may be communicated to the mobile terminal simultaneously from a plurality of cellular frequency band communications services and VHF/UHF band broadcast services.

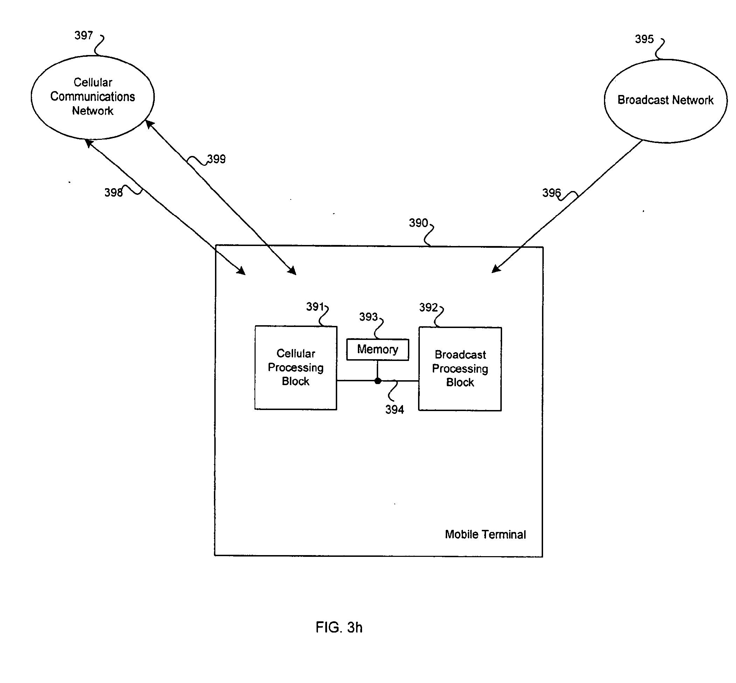

FIG. 3h is an exemplary block diagram illustrating a mobile terminal, in accordance with an embodiment of the invention. Referring to FIG. 3h, there is shown a mobile terminal 390, cellular processing block 391, broadcast processing block 392, a cellular communications network 397, a broadcast network 395, a cellular frequency band voice communication service 398, a cellular frequency band data communication service 399, a VHF/UHF band broadcast service 396, and a single memory 393. The mobile terminal 390 may be utilized to communicate with a plurality of communications networks. Exemplary aspects of communications networks as shown in FIG. 3h may comprise a plurality of cellular communications networks, such as the cellular communications network 397, and broadcast networks, such as the broadcast network 395.

The mobile terminal 390 may comprise cellular processing circuitry that processes a plurality of cellular frequency band communications services comprising at least one voice service, such as the cellular frequency band voice communication service 398, and at least one data service, such as the cellular frequency band data communication service 399, in a plurality of cellular processing integrated circuits within the cellular processing block 391. The mobile terminal 390 may also comprise broadcast processing circuitry that processes VHF/UHF band broadcast services, such as 396, in one or more single broadcast processing integrated circuit within the broadcast processing block 392. Exemplary VHF/UHF band broadcast services may be DVB, ISDB, and/or ATSC compliant.

In an exemplary aspect of the invention, the cellular processing block 391 may communicate with, and may share the single memory 393 with, the broadcast processing block 392. The single memory 393 may be coupled to the cellular processing block 391 and the broadcast processing block 392 via a memory interface 394. The memory interface 394 may comprise an asynchronous SRAM interface and/or a synchronous SDRAM interface, and may be utilized to facilitate communication between at least one cellular processing integrated circuit within the cellular processing block 391 and at least one broadcast processing integrated circuit within the broadcast processing block 392 during signal processing.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A system for communicating with a plurality of communications networks, the system comprising:
cellular processing circuitry that processes a plurality of cellular frequency band communications services, comprising at least one cellular voice service and at least one cellular data service, said cellular processing circuitry comprising a plurality of cellular processing integrated circuits within a mobile terminal; and
broadcast processing circuitry that processes VHF/UHF frequency band broadcast services in at least one single broadcast processing integrated circuit within said mobile terminal,
wherein said plurality of cellular processing integrated circuits communicates with, and shares at least a single memory with, said at least one single broadcast processing integrated circuit.

2. The system according to claim 1, wherein said single memory is coupled to at least a portion of said plurality of cellular processing integrated circuits and said at least one single broadcast processing integrated circuit via a memory interface.

3. The system according to claim 1, wherein said VHF/UHF frequency band broadcast services are received from one of a digital video broadcasting (DVB) system, an ISDB system, and an ATSC system.

4. The system according to claim 1, wherein said plurality of cellular frequency band communications services are received from at least one of a global system for mobile communications (GSM), a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and a multiple broadcast/multicast service (MBMS) system.

5. A method for communicating with a plurality of communications networks, the method comprising:
processing a plurality of cellular frequency band communications services, comprising at least one cellular voice service and at least one cellular data service, in a plurality of cellular processing integrated circuits within a mobile terminal; and
processing VHF/UHF frequency band broadcast services in at least one single broadcast processing integrated circuit within said mobile terminal,
wherein said plurality of cellular processing integrated circuits communicates with, and shares at least a single memory with, said at least one single broadcast processing integrated circuit.

6. The method according to claim 5, wherein said single memory is coupled to at least a portion of said plurality of cellular processing integrated circuits and said at least one single broadcast processing integrated circuit via a memory interface.

7. The method according to claim 5, further comprising receiving said VHF/UHF frequency band broadcast services from one of a digital video broadcasting (DVB) system, an ISDB system, and an ATSC system.

8. The method according to claim 5, wherein said plurality of cellular frequency band communications services are received from at least one of a global system for mobile communications (GSM), a general packet radio service (GPRS) system, an enhanced data rates for GSM evolution (EDGE) system, a code division multiple access 2000 (CDMA-2000) system, a wideband CDMA (W-CDMA) system, a high-speed downlink packet access (HSDPA) system, and a multiple broadcast/multicast service (MBMS) system.

9. A system for communicating with a plurality of communications networks, the system comprising:
a mobile terminal comprising:
a plurality of cellular processing integrated circuits that process at least one cellular voice channel and at least one cellular data channel;
at least one channel interface coupled to each of said plurality of cellular processing integrated circuits;
at least one single broadcast processor integrated circuit that processes a UHFNHF channel coupled to said at least one channel interface;
a memory interface coupled to at least one of said plurality of cellular processing integrated circuits,
said memory interface coupled to said at least one single broadcast processor integrated circuit; and
memory coupled to said memory interface.

10. The system according to claim 9, further comprising a control interface that couples at least a portion of said plurality of cellular processing integrated circuits.
